# EUROPEAN PATENT SPECIFICATION

(11) **EP 3 567 898 B1**
(45) Date of publication and mention of the grant of the patent: **17.08.2022**
(21) Application number: 17889829.2
(22) Date of filing: 14.11.2017
(51) Int. Cl.: H04W 76/15, H04W 92/20

(54) **METHOD AND DEVICE FOR MANAGING A RADIO LINK**
VERFAHREN UND VORRICHTUNG ZUR VERWALTUNG EINER FUNKVERBINDUNG
PROCÉDÉ ET DISPOSITIF DE GESTION D'UNE LIAISON RADIO

(30) Priority: 05.01.2017 CN 201710008500
(43) Date of publication of application: 13.11.2019
(73) Proprietor: ZTE Corporation, Shenzhen, Guangdong 518057 (CN)
(72) Inventor: YANG, Li, Shenzhen Guangdong 518057 (CN)
(74) Representative: Regimbeau
(86) International application number: PCT/CN2017/110926
(87) International publication number: WO 2018/126797

(56) References cited:
- EP-A1- 3 001 764
- EP-A1- 3 425 947
- WO-A1-2014/108022
- WO-A1-2016/162045
- CN-A- 102 026 275
- CN-A- 102 695 225
- CN-A- 103 763 747
- CATT: "3GPP TSG RAN WG2 Meeting #95; R2-164799; Open issues of LTE-NR Tight Interworking", 3GPP DRAFT; R2-164799, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Gothenburg, Sweden; 20160822 - 20160826 13 August 2016 (2016-08-13), XP051134019, Retrieved from the Internet: URL:http://www.3gpp.org/ftp/tsg_ran/WG2_RL 2/TSGR2_95/Docs/ [retrieved on 2016-08-13]

## Description

### TECHNICAL FIELD

The present invention relates to the technical field of mobile communications and, in particular, to a method and a device for managing a radio link.

### BACKGROUND

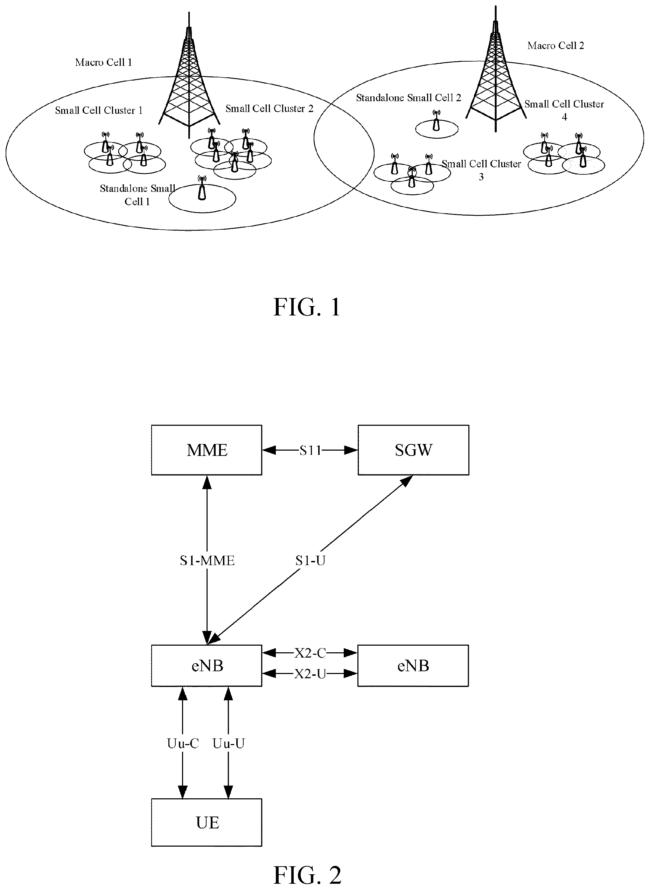

For any cellular mobile system, whatever the specific radio access technology (RAT) behind it, the cellular mobile system is generally composed of a basic network node (such as a core network (CN), a gateway, a control unit (CU), a base station (BS), and a distributed unit (DU)) of a cellular network, a terminal user equipment (UE), and a most basic coverage unit providing a mobile communication radio link service, a serving cell (Cell) or a serving beam (Beam). FIG. 1 is a schematic diagram of a cellular network composed of macro base stations and small base stations (corresponding to macro cells and small cells) in a cellular mobile system. The cell downlink coverage reflects an effective transmission range when the base station node (e.g., an evolved Node B (eNB), a Next Generation Node B (gNB), a transmission and reception point (TRP) and the like) can implement a controllable downlink transmission effect. The cell downlink load reflects a degree to which the current downlink air interface radio resource of the base station node is used and occupied. The cell uplink coverage reflects an effective transmission range when the terminal can implement a controllable uplink transmission effect, which may be different from the cell downlink coverage. The cell uplink load reflects a degree to which the current uplink air interface radio resource of the base station node is used and occupied, which may be different from the cell downlink load. With an increasing number of cellular mobile users and a huge access transmission demand for various data services, operators often implement hotspot area coverage through networking of low power nodes (LPNs) or small cells. The LPN is also referred to as the micro cell or the small cell. The coverage range of the LPN is much smaller than that of the macro cell. The LPN is generally covered or overlapped in an umbrella form by the macro cell deployed at the inter-frequency.

The Long Term Evolution (LTE) cellular mobile system in the fourth generation (4G) is used as an example below. The LTE cellular mobile system includes an evolved universal terrestrial radio access network (E-UTRAN) and a CN (e.g., a mobility management entity (MME) and a serving gateway (SGW)). The E-UTRAN includes a large number of eNBs. The eNB is connected to the CN through an S1 interface and the eNBs are connected to each other through an X2 interface. A single eNB can manage one or more serving cells, and provide uplink and downlink data transmission services for the UE through an air interface Uu. The system architecture and interfaces of the LTE are shown in FIG. 2. The MME and the eNB provide various communication services, allocate related radio resources, and configure a corresponding data radio bearer (DRB) for the UE. A master control anchor eNB establishes a unique radio resource control (RRC) layer signaling radio bearer (SRB) for the terminal UE to preform wireless management and configuration on the UE. To maintain continuity of the Quality of Service (QoS) associated with each DRB in the UE movement process and to achieve equalization/rationalization of uplink and downlink radio resources between eNBs, the eNB implements mobility or radio resource aggregation control between homogeneous/heterogeneous macro and small serving cells on the UE through a specific mobile handover procedure.

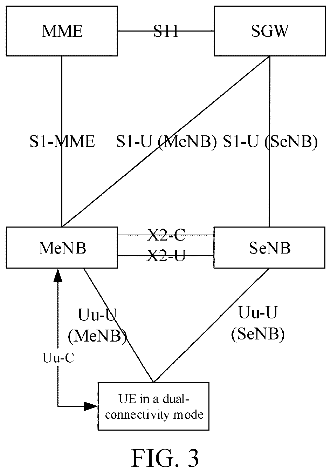

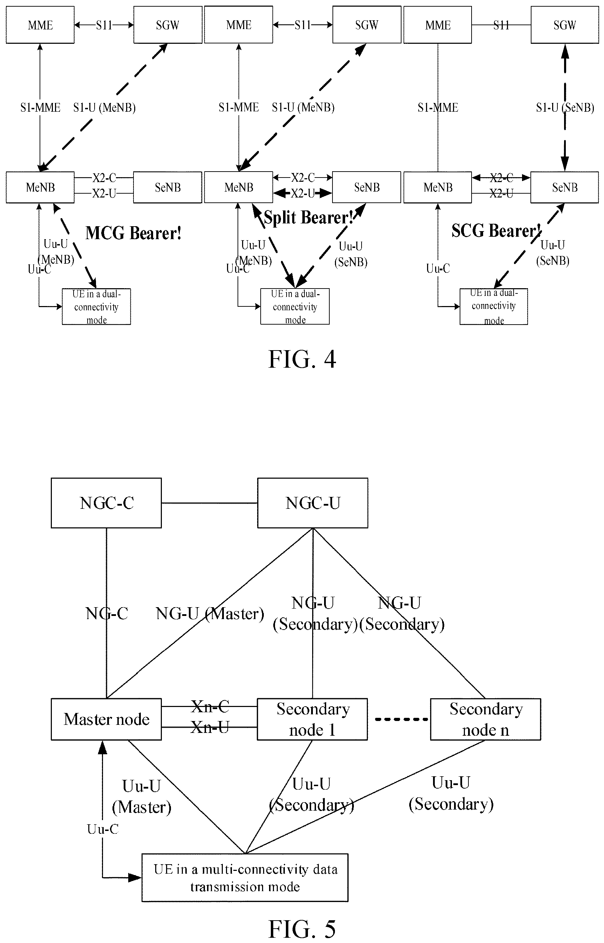

Currently, the LTE technology has been able to support the terminal UE to simultaneously establish a radio link with the macro cell and the small cell, and simultaneously preform uplink and downlink data transmission, which is referred to as an LTE dual connectivity (DC) technology. An operating principle of the LTE DC technology is, as shown in FIG. 3, that the UE in an LTE DC data transmission mode can simultaneously perform uplink and downlink duplex communications with both a master control anchor eNodeB (Master eNodeB, i.e., MeNB) and a secondary offloading eNodeB (Secondary eNodeB, i.e., SeNB). The MeNB is a master control anchor eNB for controlling and managing the radio link (RL) of the UE, which establishes the RRC and is responsible for the mobility and configuration management of the UE. The MeNB has the function of simultaneously connecting an upstream CN node and a downstream UE. Logically, the SeNB must be connected to the MeNB through the X2 interface to provide the UE with functions related to user traffic data packet offload transmission. The functions are performed to aggregate radio resources on the SeNB side, enhance the user data transmission rate, and improve the system capacity and uplink and downlink traffic load distribution. It can be simply understood that the non access stratum (NAS) control signaling interaction between the UE and the MME of the CN of the LTE can be implemented only through the MeNB, and the access stratum (AS) control signaling interaction between the UE and the access network of the LTE can be implemented only through the MeNB; and the user traffic data packet transmission interaction between the UE and the CN and the access network of the LTE can be implemented though a Master Cell Group (MCG) RL on the MeNB side, and can also be implemented through a Secondary Cell Group (SCG) RL on the SeNB side; while the AS RRC control signaling interaction between the SeNB and the MME of the CN or the UE must be implemented through the MeNB as a transfer point instead of being directly implemented though the SCG RL. The LTE DC technology supports three basic DRB types, as shown in FIG. 4. The left in FIG. 4 shows a main radio bearer, i.e., an MCG bearer, (equivalent to a radio bearer in a single connectivity data transmission mode) in the LTE DC technology, which implements the uplink and downlink transmission of the user traffic data packet by aggregating a serving cell group (Master Cell Group, i.e., MCG) on the MeNB side. The middle in FIG. 4 shows a radio split bearer in the LTE DC technology, which implements the uplink and downlink transmission of the user traffic data packet by aggregating the MCG on the MeNB side and a serving cell group (Secondary Cell Group, i.e., SCG) on the SeNB side. The right in FIG. 4 shows a secondary radio bearer, i.e., an SCG bearer, in the LTE DC technology, which implements the uplink and downlink transmission of the user traffic data packet by aggregating the SCG on the SeNB side.

After the 4G LTE cellular network has been operated for years, with the explosive growth and expansion of different types of user traffic data packet transmission demands in various industries, the 5G New RAN system (including an evolved LTE (eLTE) system based on the LTE and a revolutionary New Radio (NR) system) has been being researched and designed, and related standards have been being formulated. Compared with the traditional 3G universal mobile telecommunications system (UMTS) and 4G LTE mobile cellular communication systems, the application scenarios of the 5G cellular system are of great different. A future 5G mobile network needs to provide not only services for communications between people, but also various services for a wide variety of Internet of Things devices. Compared with the existing mobile network, by using the 5G mobile network, virtual reality, high-definition videos and other services with ultrahigh data transmission rate requirements, or car networking unmanned driving, telemedicine surgery and other services with low-latency and ultra-reliable transmission service requirements, as well as the density of terminals in the small Internet of Things, will be greatly improved in terms of the transmission rate, single-user uplink and downlink rate, end-to-end delay, and the number of accessible terminal UEs per square meter.

In the future, to better cooperatively utilize the 4G LTE and the 5G New RAN (the 5G-related radio nodes will be simply illustrated by the NR gNBs) these two relatively independent cellular mobile networks, the operators will aggregate radio resources of two or more homogeneous/heterogeneous base station nodes in a manner similar to the LTE DC tightly coupled DC in the scenario of the mixed deployment of 4G/5G/wireless local area network (WLAN) heterogeneous system networks (that is, different LTE eNBs, eLTE eNBs, NR gNBs and WLAN access points (APs) are deployed at different frequencies or in different areas). In this way, the UE can simultaneously establish and maintain radio links with two or more homogeneous/heterogeneous base station nodes (hereinafter referred to as a multi-connectivity data transmission mode) which together implement the uplink and downlink transmission of the user traffic data packet. Similar to the operating principle of the LTE DC technology in FIG. 3, the principle of the multi-connectivity data transmission mode is as shown in FIG. 5. Compared with FIG. 3, in FIG. 5, the CN node is replaced with a Next Generation Core (NGC), which is still divided into a control plane entity NGC-C (similar to the MME) and a user plane entity NGC-U (similar to the SGW). In addition, the interface between a CN element and the radio access network element gNB/eNB is replaced with the NG interface, and the number of tightly coupled base station nodes for the multi-connectivity data transmission increases from two to more than two. However, one Master node (which can be the eNB or the gNB) and multiple Secondary nodes (which can be the eNB or the gNB or the WLAN AP) still exist. The interface between the base station nodes is replaced with the Xn interface (similar to the X2 interface), and the air interface Uu is still divided into Uu-C (corresponding to the SRB) for transmitting the RRC control signaling and Uu-U (corresponding to the DRB) for transmitting the user traffic data packet.

In the past and at present, the core of the operating principles of both the LTE DC technology in the 4G era and the NR heterogeneous multi-connectivity data transmission technology in the 5G era is that only one Master node base station aggregates, controls, and manages offload nodes of one or more Secondary node base stations. Therefore, the RL configuration and resource allocation conditions of all the secondary offloading nodes need to be acknowledged through the control and management of the Master node base station. For example, it is necessary to check and acknowledge whether the RL configuration and resource condition of a certain Secondary node base station conflict with the policy of the Master node base station side and whether the total configuration conflict of the aggregated master and secondary base stations exceeds the total hardware and software capability of the UE. The Secondary node base station can only passively respond to the mobility management (handover) and has no independent control and selection right.

In addition, the current multi-connectivity data transmission mode has the following multiple operating constraints and limitations.
1. When the MCG RL on the Master node base station side moves or changes (switches), all SCG RLs on the Secondary node base station side are passively affected. Not only the uplink and downlink data transmission carried on the MCG bearers is interrupted (the data transmission can be resumed after the MCG RL is successfully switched), but also the uplink and downlink data transmission carried on all SCG bearers is passively interrupted even if all SCG RLs do not move or change (switch) (the data transmission can be resumed after the MCG RL is successfully switched and the SCG bearers are reconfigured). In the handover process, the uplink and downlink data transmission on the UE side and the network side is completely interrupted and needs a period to reestablish and resume, which greatly decreases the user communication experience.
2. When the MCG RL on the Master node base station side fails to be moved or switched, resources and configurations related to all SCG RLs on the Secondary node base station side are automatically forced to be released, and then the Master node base station attempts to reestablish the RRC connection and recover the multi-connectivity transmission mode. The above process not only consumes some air interface and terrestrial interface signaling resources, but also causes a larger data transmission interruption delay, which greatly decreases the user communication experience.
3. When the MCG RL on the Master node base station side has an MCG local radio link failure (RLF), all SCG RLs on the Secondary node base station side are passively affected. Not only the uplink and downlink data transmission carried on the MCG bearers is interrupted (the data transmission can be resumed after the MCG RL is successfully recovered), but also the uplink and downlink data transmission carried on all SCG bearers is passively interrupted even if all SCG RLs do not have an SCG RLF (the data transmission can be resumed after the MCG RL is successfully recovered and the SCG bearers are reconfigured). At this point, the data transmission of the UE and the network are completely interrupted and needs a period to reestablish and resume, which greatly decreases the user communication experience.

The mechanism principle is designed to be oriented between base station nodes that are homogeneous and in the same RAT system, e.g., between 4G eNB base stations or between NR gNB base stations. All SCG RLs on the Secondary node base station side are constrained and affected by the state of the MCG RL on the Master node base station side, which further amplifies the disadvantages and limitations in the heterogeneous system base station environment due to the greater independence between heterogeneous (with different RATs) base stations.

WO 2016/162045 A1 discloses apparatuses and methods for controlling multi connectivity. CATT: "3GPP TSG RAN WG2 Meeting #95; R2-164799; Open issues of LTE-NR Tight Interworking" discloses principles for LTE-NR tight network and basic agreements.

### SUMMARY

To solve the above technical problem, embodiments of the present invention provide a method and device for managing a radio link to enable a control node (i.e., a master control anchor node) on a network side to enhance the radio link management for a UE in a heterogeneous network multi-connectivity data transmission mode.

The invention is defined by the subject-matter of the independent claims.

Preferred embodiments are provided by the dependent claims.

Provided is a method for managing a radio link. The method includes a step described below:
a master control anchor base station selects a target secondary offloading base station which is heterogeneous from the master control anchor base station from a set of secondary offloading base stations, performs a configuration on the target secondary offloading base station, and takes the configured target secondary offloading base station as an secondary control anchor base station, where the master control anchor base station supports a first type of control operation performed on the secondary control anchor base station and all secondary offloading base stations, the secondary control anchor base station supports a second type of control operation performed on a secondary offloading base station which is homogeneous with the secondary control anchor base station, and the first type of control operation includes the second type of control operation. In the above solution, the step that the master control anchor base station selects the target secondary offloading base station which is heterogeneous from the master control anchor base station from the set of secondary offloading base stations includes a step described below.

The master control anchor base station selects the target secondary offloading base station which is heterogeneous from the master control anchor base station from the set of secondary offloading base stations based on a radio resource management (RRM) measurement result and/or a radio bearer load of a cell in each secondary offloading base station.

In the above solution, the step that the master control anchor base station performs the configuration on the target secondary offloading base station includes a step described below. The configuration is performed on the target secondary offloading base station through Xn interface signaling of an interface between base station nodes, where the configuration includes a first type of configuration and a second type of configuration, the first type of configuration is used for implementing the first type of control operation supported by the master control anchor base station and performed on the secondary control anchor base station, and the second type of configuration is used for implementing the second type of control operation supported by the secondary control anchor base station and performed on the secondary offloading base station which is homogeneous with the secondary control anchor base station.

In the above solution, the method further includes a step described below:
the master control anchor base station perform a configuration on a common secondary offloading base station through the Xn interface signaling, where the configuration includes only the first type of configuration, and
secondary offloading base stations except the secondary control anchor base station in the set of secondary offloading base stations are common secondary offloading base stations.

In the above solution, the method further includes a step described below:
the master control anchor base station performs a configuration related to the secondary control anchor base station on a terminal user equipment (UE) through radio resource control (RRC) signaling of a Uu air interface, where the configuration related to the secondary control anchor base station includes a third type of configuration and a fourth type of configuration, the third type of configuration is used for implementing control plane link logic between the UE and the secondary control anchor base station, and the fourth type of configuration is used for implementing user plane link logic between the UE and the secondary control anchor base station.

In the above solution, a control plane link and a user plane link exist between the secondary control anchor base station and a core network (CN) element.

When a control plane link between the master control anchor base station and the CN element is in a normal operation state, the control plane link between the secondary control anchor base station and the CN element is in a configuration active state or in an inactive state, and the user plane link between the secondary control anchor base station and the CN element is in an active state and operates normally.

When the control plane link between the master control anchor base station and the CN element is in an abnormal operation state, the control plane link and the user plane link between the secondary control anchor base station and the CN element are in the active state and operate normally.

In the above solution, a control plane link and a user plane link exist between the secondary control anchor base station and the UE.

The control plane link between the secondary control anchor base station and the UE and a control plane link between the master control anchor base station and the UE are supported to be simultaneously in an active state and operate normally, so as to simultaneously and jointly transmit respective RRC signaling of the secondary control anchor base station and the master control anchor base station.

The user plane link between the secondary control anchor base station and the UE and a user plane link between each secondary offloading base station and the UE are supported to be simultaneously in the active state and operate normally, so as to simultaneously and jointly transmit respective user plane data of the secondary control anchor base station and the each secondary offloading base station.

In the above solution, the method further includes a step described below:
after the master control anchor base station configures the target secondary offloading base station as the secondary control anchor base station, the master control anchor base station supports a first type of control operation performed on a common secondary offloading base station which is homogeneous with the master control anchor base station, where secondary offloading base stations except the secondary control anchor base station in the set of secondary offloading base stations are common secondary offloading base stations.

In the above solution, the secondary control anchor base station supporting the second type of control operation performed on the secondary offloading base station which is homogeneous with the secondary control anchor base station includes a step that the secondary control anchor base station performs at least one of following control operations on a common secondary offloading base station which is homogeneous with the secondary control anchor base station:
a radio link addition operation, a radio link deletion operation, a radio link reconfiguration operation, an operation for updating a set of UE serving cells, and a data radio bearer (DRB) reconfiguration operation;
secondary offloading base stations except the secondary control anchor base station in the set of secondary offloading base stations are common secondary offloading base stations.

In the above solution, the method further includes a step described below:
after the secondary control anchor base station successfully performs the second type of control operation on the common secondary offloading base station, a result of the second type of control operation is synchronized through an Xn signaling interface between the master control anchor base station and the secondary control anchor base station, so as to synchronize an operation resource configuration state of the common secondary offloading base station.

In the above solution, the method further includes a step described below:
in case of a radio link connection failure or a mobile handover failure between the master control anchor base station and a UE, the master control anchor base station is allowed to activate the secondary control anchor base station, where when the secondary control anchor base station is in an active state, the secondary control anchor base station performs following additional tasks: a task carried on a control plane link between a new master control anchor base station served by the secondary control anchor base station and a CN element, and a task carried on a control plane link between the new master control anchor base station and the UE.

In the above solution, the method further includes:
an old master control anchor base station is released from a multi-connectivity configuration of the UE, or
the old master control anchor base station is configured as the common secondary offloading base station, or
the old master control anchor base station is configured as a new secondary control anchor base station.

Secondary offloading base stations except the secondary control anchor base station in the set of secondary offloading base stations are common secondary offloading base stations.

In the above solution, the step that the old master control anchor base station is released from a multi-connectivity configuration of the UE includes: releasing a control plane link and a user plane link between the old master control anchor base station and the CN element and a link-related resource, and releasing a control plane link and a user plane link between the old master control anchor base station and the UE and a link-related resource.

In the above solution, the step that the old master control anchor base station is configured as the common secondary offloading base station includes: releasing a control plane link between the old master control anchor base station and the CN element and a control plane link between the old master control anchor base station and the UE, configuring a user plane link between the old master control anchor base station and the CN element as a user plane link between the common secondary offloading base station and the CN element, and configuring a user plane link between the old master control anchor base station and the UE as a user plane link between the common secondary offloading base station and the UE.

In the above solution, the step that the old master control anchor base station is configured as a new secondary control anchor base station includes: configuring a control plane link between the old master control anchor base station and the CN element as a control plane link between the new secondary control anchor base station and the CN element, configuring a control plane link between the old master control anchor base station and the UE as a control plane link between the new secondary control anchor base station and the UE, configuring a user plane link between the old master control anchor base station and the CN element as a user plane link between the new secondary control anchor base station and the CN element, and configuring a user plane link between the old master control anchor base station and the UE as a user plane link between the new secondary control anchor base station and the UE.

Further provided is a method for managing a radio link. The method includes a step described below:
a secondary control anchor base station receives a configuration performed by a master control anchor base station which is heterogeneous from the secondary control anchor base station, where the master control anchor base station supports a first type of control operation performed on the secondary control anchor base station and all secondary offloading base stations, the secondary control anchor base station supports a second type of control operation performed on a secondary offloading base station which is homogeneous with the secondary control anchor base station, and the first type of control operation includes the second type of control operation.

In the above solution, the step that the secondary control anchor base station receives the configuration performed by the master control anchor base station which is heterogeneous from the secondary control anchor base station includes a step described below:
the secondary control anchor base station receives the configuration performed by the master control anchor base station which is heterogeneous from the secondary control anchor base station through Xn interface signaling, where a first type of configuration is used for implementing the first type of control operation supported by the master control anchor base station and performed on the secondary control anchor base station, and a second type of configuration is used for implementing the second type of control operation supported by the secondary control anchor base station and performed on the secondary offloading base station which is homogeneous with the secondary control anchor base station.

In the above solution, a control plane link and a user plane link exist between the secondary control anchor base station and a CN element.

When a control plane link between the master control anchor base station and the CN element is in a normal operation state, the control plane link between the secondary control anchor base station and the CN element is in a configuration active state or in an inactive state, and the user plane link between the secondary control anchor base station and the CN element is in an active state and operates normally.

When the control plane link between the master control anchor base station and the CN element is in an abnormal operation state, the control plane link and the user plane link between the secondary control anchor base station and the CN element are in the active state and operate normally.

In the above solution, a control plane link and a user plane link exist between the secondary control anchor base station and the UE.

The control plane link between the secondary control anchor base station and the UE and a control plane link between the master control anchor base station and the UE are supported to be simultaneously in an active state and operate normally, so as to simultaneously and jointly transmit respective RRC signaling of the secondary control anchor base station and the master control anchor base station.

The user plane link between the secondary control anchor base station and the UE and a user plane link between each secondary offloading base station and the UE are supported to be simultaneously in the active state and operate normally, so as to simultaneously and jointly transmit respective user plane data of the secondary control anchor base station and the each secondary offloading base station.

In the above solution, the secondary control anchor base station supporting the second type of control operation performed on the secondary offloading base station which is homogeneous with the secondary control anchor base station includes a step that the secondary control anchor base station performs at least one of following control operations on a common secondary offloading base station which is homogeneous with the secondary control anchor base station:
a radio link addition operation, a radio link deletion operation, a radio link reconfiguration operation, an operation for updating a set of UE serving cells, and a DRB reconfiguration operation;
secondary offloading base stations except the secondary control anchor base station in the set of secondary offloading base stations are common secondary offloading base stations.

In the above solution, the method further includes a step described below:
after the secondary control anchor base station successfully performs the second type of control operation on the common secondary base station, a control operation result is synchronized through an Xn interface between the master control anchor base station and the secondary control anchor base station, so as to synchronize an operation resource configuration state of the common secondary offloading base station.

In the above solution, the method further includes a step described below:
in case of a radio link connection failure or a mobile handover failure between the master control anchor base station and the UE, the secondary control anchor base station is allowed to be activated by the master control anchor base station, where when the secondary control anchor base station is in the active state, the secondary control anchor base station performs following additional tasks: a task carried on a control plane link between a new master control anchor base station served by the secondary control anchor base station and the CN element, and a task carried on a control plane link between the new master control anchor base station and the UE.

Further provided is a system for managing a radio link. The system is applied to a master control anchor base station, and includes a selection unit and a configuration unit described below.

The selection unit is configured to select a target secondary offloading base station which is heterogeneous from the master control anchor base station from a set of secondary offloading base stations.

The configuration unit is configured to perform a configuration on the target secondary offloading base station and take the configured target secondary offloading base station as an secondary control anchor base station.

The master control anchor base station supports a first type of control operation performed on the secondary control anchor base station and all secondary offloading base stations, the secondary control anchor base station supports a second type of control operation performed on a secondary offloading base station which is homogeneous with the secondary control anchor base station, and the first type of control operation includes the second type of control operation.

In the above solution, the selection unit is specifically configured to select the target secondary offloading base station which is heterogeneous from the master control anchor base station from the set of secondary offloading base stations based on an RRM measurement result and/or a radio bearer load of a cell in each secondary offloading base station.

In the above solution, the configuration unit is specifically configured to performing the configuration on the target secondary offloading base station through Xn interface signaling of an interface between base station nodes, where the configuration includes a first type of configuration and a second type of configuration, the first type of configuration is used for implementing the first type of control operation supported by the master control anchor base station and performed on the secondary control anchor base station, and the second type of configuration is used for implementing the second type of control operation supported by the secondary control anchor base station and performed on the secondary offloading base station which is homogeneous with the secondary control anchor base station.

In the above solution, the configuration unit is further configured to perform the configuration on a common secondary offloading base station through the Xn interface signaling, where the configuration includes only the first type of configuration, and secondary offloading base stations except the secondary control anchor base station in the set of secondary offloading base stations are common secondary offloading base stations.

In the above solution, the configuration unit is further configured to perform a configuration related to the secondary control anchor base station on a terminal UE through RRC signaling of a Uu air interface, where the configuration related to the secondary control anchor base station includes a third type of configuration and a fourth type of configuration, the third type of configuration is used for implementing control plane link logic between the UE and the secondary control anchor base station, and the fourth type of configuration is used for implementing user plane link logic between the UE and the secondary control anchor base station.

In the above solution, a control plane link and a user plane link exist between the secondary control anchor base station and a CN element.

When a control plane link between the master control anchor base station and the CN element is in a normal operation state, the control plane link between the secondary control anchor base station and the CN element is in a configuration active state or in an inactive state, and the user plane link between the secondary control anchor base station and the CN element is in an active state and operates normally.

When the control plane link between the master control anchor base station and the CN element is in an abnormal operation state, the control plane link and the user plane link between the secondary control anchor base station and the CN element are in active states and operate normally. In the above solution, a control plane link and a user plane link exist between the secondary control anchor base station and the UE.

The control plane link between the secondary control anchor base station and the UE and a control plane link between the master control anchor base station and the UE are supported to be simultaneously in an active state and operate normally, so as to simultaneously and jointly transmit respective RRC signalings of the secondary control anchor base station and the master control anchor base station.

The user plane link between the secondary control anchor base station and the UE and a user plane link between each secondary offloading base station and the UE are supported to be simultaneously in the active state and operate normally, so as to simultaneously and jointly transmit user plane data of the secondary control anchor base station and user plane data of the each secondary offloading base station.

In the above solution, after the master control anchor base station configures the target secondary offloading base station as the secondary control anchor base station, the master control anchor base station supports a first type of control operation performed on a common secondary offloading base station which is homogeneous with the master control anchor base station, where secondary offloading base stations except the secondary control anchor base station in the set of secondary offloading base stations are common secondary offloading base stations.

In the above solution, the secondary control anchor base station supporting the second type of control operation performed on the secondary offloading base station which is homogeneous with the secondary control anchor base station includes a step that the secondary control anchor base station performs at least one of following control operations on a common secondary offloading base station which is homogeneous with the secondary control anchor base station:
a radio link addition operation, a radio link deletion operation, a radio link reconfiguration operation, an operation for updating a set of UE serving cells, and a DRB reconfiguration operation;
secondary offloading base stations except the secondary control anchor base station in the set of secondary offloading base stations are common secondary offloading base stations.

In the above solution, the device further includes a communication unit. The communication unit is configured to, after the secondary control anchor base station successfully performs the second type of control operation on the common secondary offloading base station, synchronize a result of the second type of control operation through an Xn signaling interface between the master control anchor base station and the secondary control anchor base station, so as to synchronize an operation resource configuration state of the common secondary offloading base station.

In the above solution, the device further includes an activation unit. The activation unit is configured to, in case of a radio link connection failure or a mobile handover failure between the master control anchor base station and the UE, allow the master control anchor base station to activate the secondary control anchor base station, where when the secondary control anchor base station is in an active state, the secondary control anchor base station performs following additional tasks: a task carried on a control plane link between a new master control anchor base station served by the secondary control anchor base station and a CN element, and a task carried on a control plane link between the new master control anchor base station and the UE.

Further provided is a device for managing a radio link. The device is applied to an secondary control anchor base station, and includes a communication unit described below.

The communication unit is configured to receive a configuration performed by a master control anchor base station which is heterogeneous from the secondary control anchor base station, where the master control anchor base station supports a first type of control operation performed on the secondary control anchor base station and all secondary offloading base stations, the secondary control anchor base station supports a second type of control operation performed on a secondary offloading base station which is homogeneous with the secondary control anchor base station, and the first type of control operation includes the second type of control operation.

In the above solution, the communication unit is specifically configured to receive the configuration performed by the master control anchor base station which is heterogeneous from the secondary control anchor base station through Xn interface signaling, where a first type of configuration is used for implementing the first type of control operation supported by the master control anchor base station and performed on the secondary control anchor base station, and a second type of configuration is used for implementing the second type of control operation supported by the secondary control anchor base station and performed on the secondary offloading base station which is homogeneous with the secondary control anchor base station. In the above solution, a control plane link and a user plane link exist between the secondary control anchor base station and a CN element.

When a control plane link between the master control anchor base station and the CN element is in a normal operation state, the control plane link between the secondary control anchor base station and the CN element is in a configuration active state or in an inactive state, and the user plane link between the secondary control anchor base station and the CN element is in an active state and operates normally.

When the control plane link between the master control anchor base station and the CN element is in an abnormal operation state, the control plane link and the user plane link between the secondary control anchor base station and the CN element are in active states and operate normally. In the above solution, a control plane link and a user plane link exist between the secondary control anchor base station and the UE.

The control plane link between the secondary control anchor base station and the UE and a control plane link between the master control anchor base station and the UE are supported to be simultaneously in an active state and operate normally, so as to simultaneously and jointly transmit respective RRC signalings of the secondary control anchor base station and the master control anchor base station.

The user plane link between the secondary control anchor base station and the UE and a user plane link between each secondary offloading base station and the UE are supported to be simultaneously in the active state and operate normally, so as to simultaneously and jointly transmit user plane data of the secondary control anchor base station and user plane data of the each secondary offloading base station.

In the above solution, the secondary control anchor base station supporting the second type of control operation performed on the secondary offloading base station which is homogeneous with the secondary control anchor base station includes a step that the secondary control anchor base station performs at least one of following control operations on a common secondary offloading base station which is homogeneous with the secondary control anchor base station:
a radio link addition operation, a radio link deletion operation, a radio link reconfiguration operation, an operation for updating a set of UE serving cells, and a DRB reconfiguration operation;
secondary offloading base stations except the secondary control anchor base station in the set of secondary offloading base stations are common secondary offloading base stations.

In the above solution, the device further includes a communication unit. The communication unit is configured to, after the secondary control anchor base station successfully performs the second type of control operation on the common secondary base station, synchronize a control operation result through an Xn interface between the master control anchor base station and the secondary control anchor base station, so as to synchronize an operation resource configuration state of the common secondary offloading base station.

In the above solution, in case of a radio link connection failure or a mobile handover failure between the master control anchor base station and the UE, the secondary control anchor base station is allowed to be activated by the master control anchor base station, where when the secondary control anchor base station is in the active state, the secondary control anchor base station performs following additional tasks: a task carried on a control plane link between a new master control anchor base station served by the secondary control anchor base station and the CN element, and a task carried on a control plane link between the new master control anchor base station and the UE.

Further provided is a system for managing a radio link. The system includes a master control anchor base station and a set of secondary offloading base stations.

The master control anchor base station is configured to select a target secondary offloading base station which is heterogeneous from the master control anchor base station from the set of secondary offloading base stations, perform a configuration on the target secondary offloading base station, and take the configured target secondary offloading base station as an secondary control anchor base station, where the master control anchor base station supports a first type of control operation performed on the secondary control anchor base station and all secondary offloading base stations, the secondary control anchor base station supports a second type of control operation performed on a secondary offloading base station which is homogeneous with the secondary control anchor base station, and the first type of control operation includes the second type of control operation.

In the above solution, the master control anchor base station is specifically configured to select the target secondary offloading base station which is heterogeneous from the master control anchor base station from the set of secondary offloading base stations based on an RRM measurement result and/or a radio bearer load of a cell in each secondary offloading base station, and perform the configuration on the target secondary offloading base station through Xn interface signaling, where the configuration includes a first of configuration and a second of configuration, the first type of configuration is used for implementing the first type of control operation supported by the master control anchor base station and performed on the secondary control anchor base station, and the second type of configuration is used for implementing the second type of control operation supported by the secondary control anchor base station and performed on the secondary offloading base station which is homogeneous with the secondary control anchor base station.

In the above solution, the system further includes a UE.

The master control anchor base station is specifically configured to perform a configuration related to the secondary control anchor base station on a terminal UE through RRC signaling of a Uu air interface, where the configuration related to the secondary control anchor base station includes a third type of configuration and a fourth type of configuration, the third type of configuration is used for implementing control plane link logic between the UE and the secondary control anchor base station, and the fourth type of configuration is used for implementing user plane link logic between the UE and the secondary control anchor base station.

In the above solution, a control plane link and a user plane link exist between the secondary control anchor base station and the UE.

When a control plane link between the master control anchor base station and the CN element is in a normal operation state, the control plane link between the secondary control anchor base station and the CN element is in a configuration active state or in an inactive state, and the user plane link between the secondary control anchor base station and the CN element is in an active state and operates normally.

When the control plane link between the master control anchor base station and the CN element is in an abnormal operation state, the control plane link and the user plane link between the secondary control anchor base station and the CN element are in active states and operate normally. In the above solution, after the master control anchor base station configures the target secondary offloading base station as the secondary control anchor base station, the master control anchor base station supports a first type of control operation performed on a common secondary offloading base station which is homogeneous with the master control anchor base station, where secondary offloading base stations except the secondary control anchor base station in the set of secondary offloading base stations are common secondary offloading base stations.

In the technical solution in the embodiments of the present invention, a master control anchor base station selects a target secondary offloading base station which is heterogeneous from the master control anchor base station from a set of secondary offloading base stations, performs a configuration on the target secondary offloading base station, and takes the configured target secondary offloading base station as an secondary control anchor base station, where the master control anchor base station supports a first type of control operation performed on the secondary control anchor base station and all secondary offloading base stations, the secondary control anchor base station supports a second type of control operation performed on a secondary offloading base station which is homogeneous with the secondary control anchor base station, and the first type of control operation includes the second type of control operation.

Further provided is a computer storage medium, which is configured to store computer-executable instructions for executing the method for managing a radio link described above.

When the technical solution in the embodiments of the present invention is used, one secondary control anchor base station is configured and added in a heterogeneous domain in a different RAT with respect to the master control anchor base station, so that the control and management burden related to the UE heterogeneous multi-connectivity configuration operation of the single master control anchor base station is shared by the secondary control anchor base station, and the consumption of control and management resources and air interface signaling resources within the master control anchor base station is spatially equalized. The secondary control anchor base station can have an independent control and management right to the common secondary offloading base station in a homogeneous domain in the same RAT with respect to the secondary control anchor base station, and the master control anchor base station only needs to control and manage the common secondary offloading base station in a homogeneous domain in the same RAT with respect to the master control anchor base station, so that the burden is relatively reduced.

### BRIEF DESCRIPTION OF DRAWINGS

The drawings generally illustrate various embodiments discussed in the present invention by way of example and not by way of limitation.
FIG. 1 is a schematic diagram of a heterogeneous cellular mobile network.
FIG. 2 is a schematic diagram of a single connectivity data transmission mode in the LTE.
FIG. 3 is a schematic diagram of a dual connectivity data transmission mode in the LTE.
FIG. 4 is a schematic diagram of three DRB types in a dual connectivity data transmission mode in the LTE.
FIG. 5 is a schematic diagram of a traditional multi-connectivity data transmission mode under a single master node.
FIG. 6 is a schematic diagram of an enhanced multi-connectivity data transmission mode under a Master node plus a primary secondary node.
FIG. 7a is a schematic diagram one of a transmission mode according to an embodiment 1 of the present invention.
FIG. 7b is a schematic diagram two of a transmission mode according to an embodiment 1 of the present invention.
FIG. 7c is a schematic diagram three of a transmission mode according to an embodiment 1 of the present invention.
FIG. 8a is a schematic diagram one of a transmission mode according to an embodiment 2 of the present invention.
FIG. 8b is a schematic diagram two of a transmission mode according to an embodiment 2 of the present invention.
FIG. 8c is a schematic diagram three of a transmission mode according to an embodiment 2 of the present invention.
FIG. 9a is a schematic diagram one of a transmission mode according to an embodiment 3 of the present invention.
FIG. 9b is a schematic diagram two of a transmission mode according to an embodiment 3 of the present invention.
FIG. 9c is a schematic diagram three of a transmission mode according to an embodiment 3 of the present invention.
FIG. 9d is a schematic diagram four of a transmission mode according to an embodiment 3 of the present invention.
FIG. 10 is a flowchart one of a radio link managing method according to an embodiment of the present invention.
FIG. 11 is a flowchart two of a radio link managing method according to an embodiment of the present invention.
FIG. 12 is a structural diagram one of a radio link managing device according to an embodiment of the present invention.
FIG. 13 is a structural diagram two of a radio link managing device according to an embodiment of the present invention.

### DETAILED DESCRIPTION

To provide a more detailed understanding of features and content of embodiments of the present invention, implementation of the embodiments of the present disclosure is described below in detail with reference to the drawings. The drawings are provided for reference only and are not intended to limit the embodiments of the present invention.

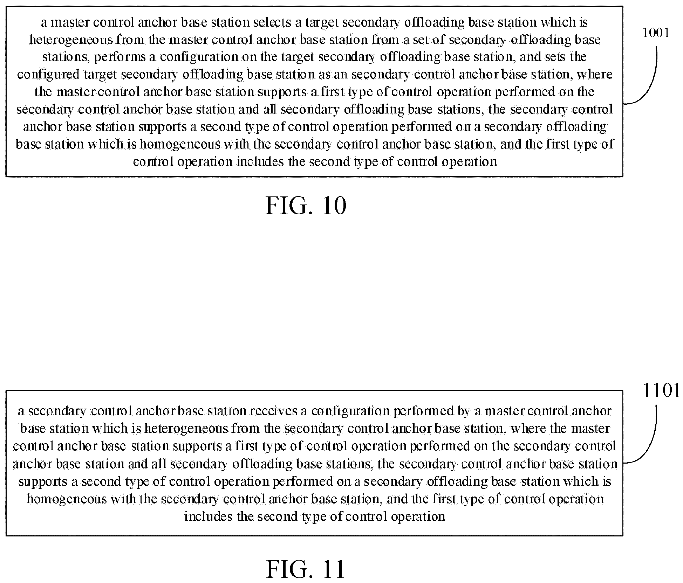

FIG. 10 is a flowchart 1 of a radio link managing method according to an embodiment of the present invention. As shown in FIG. 10, the radio link managing method includes step 1001.

In step 1001, a master control anchor base station selects, from a set of secondary offloading base stations, a target secondary offloading base station which is heterogeneous from the master control anchor base station, performs a configuration on the target secondary offloading base station, and sets the configured target secondary offloading base station as a secondary control anchor base station. The master control anchor base station supports a first type of control operation performed on the secondary control anchor base station and all secondary offloading base stations, the secondary control anchor base station supports a second type of control operation performed on a secondary offloading base station which is homogeneous with the secondary control anchor base station, and the first type of control operation includes the second type of control operation.

In the embodiment, the step that the master control anchor base station selects, from the set of secondary offloading base stations, the target secondary offloading base station which is heterogeneous from the master control anchor base station includes a step described below:
the master control anchor base station selects, from the set of secondary offloading base stations, the target secondary offloading base station which is heterogeneous from the master control anchor base station based on a radio resource management (RRM) measurement result and/or a radio bearer load of a cell in each secondary offloading base station.

In the embodiment, the step that the master control anchor base station performs the configuration on the target secondary offloading base station includes a step described below:
the configuration is performed on the target secondary offloading base station through Xn interface signaling of an interface between base station nodes, where the configuration includes a first type of configuration and a second type of configuration, the first type of configuration is used for implementing the first type of control operation supported by the master control anchor base station and performed on the secondary control anchor base station, and the second type of configuration is used for implementing the second type of control operation supported by the secondary control anchor base station and performed on the secondary offloading base station which is homogeneous with the secondary control anchor base station.

Here, the first type of configuration is related to a data transmission offloading operation of the secondary control anchor base station as a common secondary offloading base station, and the second type of configuration is related to a data transmission secondary control role of the secondary control anchor base station as a special secondary offloading base station.

In the embodiment, the method further includes a step described below: the master control anchor base station performs a configuration on a common secondary offloading base station through an Xn interface signaling, where the configuration includes only the first type of configuration, and in the set of secondary offloading base stations, secondary offloading base stations except the secondary control anchor base station are common secondary offloading base stations.

In the embodiment, the method further includes a step described below:
the master control anchor base station performs a configuration related to the secondary control anchor base station on a terminal user equipment (UE) through a radio resource control (RRC) signaling of a Uu air interface, where the configuration related to the secondary control anchor base station includes a third type of configuration and a fourth type of configuration, the third type of configuration is used for implementing control plane link logic between the UE and the secondary control anchor base station, and the fourth type of configuration is used for implementing user plane link logic between the UE and the secondary control anchor base station.

In the embodiment, a control plane link and a user plane link exist between the secondary control anchor base station and a core network (CN) element.

When a control plane link between the master control anchor base station and the CN element is in a normal operation state, the control plane link between the secondary control anchor base station and the CN element is in a configuration active state or in an inactive state, and the user plane link between the secondary control anchor base station and the CN element is in an active state and operates normally.

When the control plane link between the master control anchor base station and the CN element is in an abnormal operation state, the control plane link and the user plane link between the secondary control anchor base station and the CN element are in active states and operate normally. In the embodiment, a control plane link and a user plane link exist between the secondary control anchor base station and the UE.

The control plane link between the secondary control anchor base station and the UE and a control plane link between the master control anchor base station and the UE are supported to be simultaneously in active states and operate normally, so as to simultaneously and jointly transmit respective RRC signalings of the secondary control anchor base station and the master control anchor base station.

The user plane link between the secondary control anchor base station and the UE and a user plane link between each secondary offloading base station and the UE are supported to be simultaneously in active states and operate normally, so as to simultaneously and jointly transmit user plane data of the secondary control anchor base station and user plane data of the each secondary offloading base station.

In the embodiment, the method further includes a step described below:
after the master control anchor base station sets the target secondary offloading base station as the secondary control anchor base station, the master control anchor base station supports the first type of control operation performed on a common secondary offloading base station which is homogeneous with the master control anchor base station, where in the set of secondary offloading base stations, secondary offloading base stations except the secondary control anchor base station are common secondary offloading base stations.

In the embodiment, the secondary control anchor base station supporting the second type of control operation performed on the secondary offloading base station which is homogeneous with the secondary control anchor base station includes a step that the secondary control anchor base station performs at least one of following control operations on a common secondary offloading base station which is homogeneous with the secondary control anchor base station:
a radio link addition operation, a radio link deletion operation, a radio link reconfiguration operation, an operation for updating a set of UE serving cells, and a data radio bearer (DRB) reconfiguration operation.

In the embodiment, the method further includes a step described below:
after the secondary control anchor base station successfully performs the second type of control operation on the common secondary offloading base station, a result of the second type of control operation is synchronized through an Xn interface signaling between the master control anchor base station and the secondary control anchor base station, so as to synchronize an operation resource configuration state of the common secondary offloading base station.

In the embodiment, the method further includes a step described below:
in case of a radio link connection failure or a mobile handover failure between the master control anchor base station and a UE, the master control anchor base station is allowed to activate the secondary control anchor base station, where when the secondary control anchor base station is in an active state, the secondary control anchor base station performs following additional tasks: a task carried on a control plane link between a new master control anchor base station served by the secondary control anchor base station and the CN element, and a task carried on a control plane link between the new master control anchor base station and the UE.

In the embodiment, the method further includes:
an old master control anchor base station is released from a multi-connectivity configuration of the UE, or
the old master control anchor base station is configured as the common secondary offloading base station, or
the old master control anchor base station is configured as a new secondary control anchor base station,
where in the set of secondary offloading base stations, secondary offloading base stations except the secondary control anchor base station are common secondary offloading base stations.

In the embodiment, the step that the old master control anchor base station is released from the multi-connectivity configuration of the UE includes: releasing a control plane link and a user plane link between the old master control anchor base station and the CN element and resources related to the control plane link and the user plane link between the old master control anchor base station and the CN element, and releasing a control plane link and a user plane link between the old master control anchor base station and the UE and resources related to the control plane link and the user plane link between the old master control anchor base station and the UE.

In the embodiment, the step that the old master control anchor base station is configured as the common secondary offloading base station includes: releasing a control plane link between the old master control anchor base station and the CN element and a control plane link between the old master control anchor base station and the UE, configuring a user plane link between the old master control anchor base station and the CN element as a user plane link between the common secondary offloading base station and the CN element, and configuring a user plane link between the old master control anchor base station and the UE as a user plane link between the common secondary offloading base station and the UE.

In the embodiment, the step that the old master control anchor base station is configured as a new secondary control anchor base station includes: configuring a control plane link between the old master control anchor base station and the CN element as a control plane link between the new secondary control anchor base station and the CN element, configuring a control plane link between the old master control anchor base station and the UE as a control plane link between the new secondary control anchor base station and the UE, configuring a user plane link between the old master control anchor base station and the CN element as a user plane link between the new secondary control anchor base station and the CN element, and configuring a user plane link between the old master control anchor base station and the UE as a user plane link between the new secondary control anchor base station and the UE.

When the technical solution in the embodiments of the present invention is used, one secondary control anchor base station heterogeneous from the master control anchor base station is configured and added in a different RAT region with respect to the master control anchor base station, so that the control and management burden related to the UE heterogeneous multi-connectivity configuration operation of the single master control anchor base station is shared by the secondary control anchor base station, and the consumption of control and management resources and air interface signaling resources within the master control anchor base station is spatially equalized. The secondary control anchor base station can have an independent control and management right to the common secondary offloading base station that is homogeneous with the secondary control anchor base station and in the same RAT region with respect to the secondary control anchor base station, and the master control anchor base station only needs to control and manage the common secondary offloading base station that is homogeneous with the master control anchor base station and in the same RAT region with respect to the master control anchor base station, so that the burden is relatively reduced.

When the master control anchor base station fails (e.g., a local RLF or mobile handover failure), the secondary control anchor base station may quickly replace the master control anchor base station, upgrade to a new master control anchor base station, and continue to control the UE multi-connectivity data transmission operation facing to a common secondary offloading base station set that is homogeneous with the secondary control anchor base station and in the same RAT region with respect to the secondary control anchor base station, so that the data transmission on the SCG RL side is not interrupted and service data packets are not lost. The configuration and resource reservation coordination relate to the old master control anchor base station do not need to be released and deleted immediately, because the secondary control anchor base station which upgrades to be the new master control anchor base station can continue to serve as the master control anchor base station to maintain the configuration and the resource reservation coordination relate to the old master control anchor base station, so as to continue to serve the UE heterogeneous multi-connectivity data transmission operation.

The enhanced UE heterogeneous multi-connectivity data transmission mode based on the master control anchor base station and the secondary control anchor base station may enable control and management of heterogeneous multi-connectivity data transmission to be separated among different RAT regions, enhance independence and robustness of the multi-connectivity data transmission, reduce unnecessary signaling overhead of a terrestrial interface and an air interface caused by rebuilding network nodes after the network nodes fail and are deleted, and reduce the user experience on communication connection interruption, which has more significance on user service types ultra reliable and low latency communications (URLLC) which require the high-reliability communication connection.

FIG. 11 is a flowchart two of a radio link managing method according to an embodiment of the present invention. As shown in FIG. 11, the radio link managing method includes a step 1101. In step 1101, an secondary control anchor base station receives a configuration performed by a master control anchor base station which is heterogeneous from the secondary control anchor base station, where the master control anchor base station supports a first type of control operation performed on the secondary control anchor base station and all secondary offloading base stations, the secondary control anchor base station supports a second type of control operation performed on a secondary offloading base station which is homogeneous with the secondary control anchor base station, and the first type of control operation includes the second type of control operation. In the embodiment, the step that the secondary control anchor base station receives the configuration performed by the master control anchor base station which is heterogeneous from the secondary control anchor base station includes a step described below:
the secondary control anchor base station receives the configuration performed by the master control anchor base station which is heterogeneous from the secondary control anchor base station through an Xn interface signaling, where a first type of configuration is used for implementing the first type of control operation supported by the master control anchor base station and performed on the secondary control anchor base station, and a second type of configuration is used for implementing the second type of control operation supported by the secondary control anchor base station and performed on the secondary offloading base station which is homogeneous with the secondary control anchor base station.

In the embodiment, a control plane link and a user plane link exist between the secondary control anchor base station and a CN element.

When a control plane link between the master control anchor base station and the CN element is in a normal operation state, the control plane link between the secondary control anchor base station and the CN element is in a configuration active state or in an inactive state, and the user plane link between the secondary control anchor base station and the CN element is in an active state and operates normally.

When the control plane link between the master control anchor base station and the CN element is in an abnormal operation state, the control plane link and the user plane link between the secondary control anchor base station and the CN element are in active states and operate normally. In the embodiment, a control plane link and a user plane link exist between the secondary control anchor base station and the UE.

The control plane link between the secondary control anchor base station and the UE and a control plane link between the master control anchor base station and the UE are supported to be simultaneously in active states and operate normally, so as to simultaneously and jointly transmit respective RRC signalings of the secondary control anchor base station and the master control anchor base station.

The user plane link between the secondary control anchor base station and the UE and a user plane link between each secondary offloading base station and the UE are supported to be simultaneously in active states and operate normally, so as to simultaneously and jointly transmit user plane data of the secondary control anchor base station and user plane data of the each secondary offloading base station.

In the embodiment, the secondary control anchor base station supporting the second type of control operation performed on the secondary offloading base station which is homogeneous with the secondary control anchor base station includes a step that the secondary control anchor base station performs at least one of following control operations on a common secondary offloading base station which is homogeneous with the secondary control anchor base station:
a radio link addition operation, a radio link deletion operation, a radio link reconfiguration operation, an operation for updating a set of UE serving cells, and a DRB reconfiguration operation;
where in the set of secondary offloading base stations, secondary offloading base stations except the secondary control anchor base station are common secondary offloading base stations.

In the embodiment, the method further includes one of steps described below:
after the secondary control anchor base station successfully performs the second type of control operation on the common secondary base station, a control operation result is synchronized through an Xn interface between the master control anchor base station and the secondary control anchor base station, so as to synchronize an operation resource configuration state of the common secondary offloading base station.

In the embodiment, the method further includes a step described below:
in case of a radio link connection failure or a mobile handover failure between the master control anchor base station and the UE, the secondary control anchor base station is allowed to be activated by the master control anchor base station, where when the secondary control anchor base station is in the active state, the secondary control anchor base station performs following additional tasks: a task carried on a control plane link between a new master control anchor base station served by the secondary control anchor base station and the CN element, and a task carried on a control plane link between the new master control anchor base station and the UE.

The radio link managing method in the embodiments of the present invention will be further described in detail below in conjunction with specific applications.

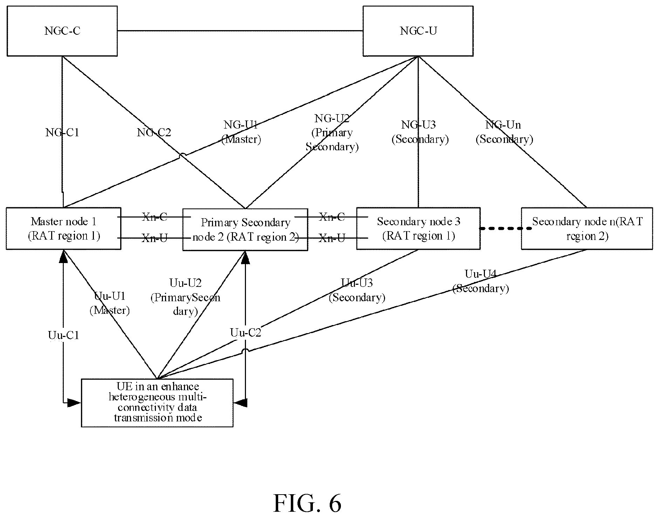

A principle of an enhanced multi-connectivity data transmission mode is as shown in FIG. 6. Compared with FIG. 5, the difference between technical solutions of the embodiments of the present invention is described below.

In FIG. 5, only one Master nodel serves as the master control anchor base station for heterogeneous multi-connectivity data transmission, while in FIG. 6, a special Secondary node may be selected from a set of Secondary nodes that are heterogeneous from the Master nodel and in different RAT systems from that of the Master node1, and then the special Secondary node is additionally configured and serves as an secondary control anchor, i.e., a Primary Secondary node2. The secondary control anchor still serves as a role of a logical association of the Secondary node with respect to the Master node1, so that Master nodel can perform a logical operation related to the Secondary node (e.g., addition, reconfiguration, deletion or the like) on the Primary Secondary node2 in a conventional manner. Meanwhile, with respect to other common Secondary nodes, the secondary control anchor, i.e., the Primary Secondary node2, may play a logical control role similar to the Master nodel on Secondary nodes which are homogeneous with and have the same RAT as the Primary Secondary node2. Therefore, the Primary Secondary node2 may preform part of related logic control and management operations (e.g., addition, reconfiguration, deletion or the like) originally performed by the Master Node1 facing to the Secondary nodes which are homogeneous from and have the same RAT as the Primary Secondary node2 in an enhanced manner.

The Master nodel selects an appropriate secondary node as the Primary Secondary node2 from a heterogeneous base station set based on an RRM measurement result, a radio load or other factors through a local RRM algorithm, and then performs an enhanced configuration on the Primary Secondary node2 through the Xn interface signaling. That is, the Primary Secondary node2, in one aspect, as the logical role of the Secondary node, needs to complete a necessary configuration related to an original secondary offloading base station just, and in another aspect, as an additional enhanced role of the secondary control anchor, needs to complete a necessary additional configuration related to the secondary control anchor base station.

In a configuration process of the Primary Secondary node2, the Master nodel needs to perform the enhanced configuration related to the Primary Secondary node2 on the UE through the RRC signaling of the Uu air interface. That is, the UE needs to, with the Primary Secondary node2, in one aspect, establish a logical association of the common Secondary node to complete the necessary related configuration of a offload radio link of the secondary offloading base station, and meanwhile, in another aspect, establish an enhanced logical association with the secondary control anchor to complete the necessary additional configuration related to a radio link of the secondary control anchor.

Similar to the Master node1, the Primary Secondary node2 has an independent control plane connection NG-C2 and a user plane connection NG-U2 (Primary Secondary) with an NGC of the CN element. Under the normal operation state of the control plane NG-C1 of the master control anchor base station, the NG-C2 can also be in an activated normal operation state. The NG-C2 can be used for transmitting NG interface signaling related to the CN. The NG-U2 (Primary Secondary) can be in the activated normal operation state as other common NG-Us (Secondary), and used for transmitting uplink and downlink user plane service data packets going from and to the CN.

Similar to the Master node 1, the Primary Secondary node2 has an independent RRC connection of a Uu-C2 air interface and a radio connection of a user plane Uu-U2 (Primary Secondary) with the UE. Both the Uu-C2 and the Uu-C1 may be in the activated normal operation state and are used for transmitting the RRC signaling related to the Primary Secondary node 2 and the RRC signaling related to the Master node 1. The Uu-U2 (Primary Secondary) may be in the activated normal operation state as other ordinary Uu-U (Secondary) and is used for transmitting uplink and downlink user traffic data packets going from and to the Uu air interface.

After the Master nodel determines and configures a specific target Secondary node as the Primary Secondary node2, the Master nodel needs to perform the additional configuration related to the Primary Secondary node2 on the UE through the Uu-C1 air interface RRC signaling. The UE needs to take the Primary Secondary node2 as the common Secondary node to implement necessary configuration and resource reservation coordination related to a SCG RL, and meanwhile needs to take the Primary Secondary node2 as the logical role of the secondary control anchor base station to implement additional configuration and resource reservation coordination related to a Primary SCG RL.

After the Master nodel determines and configures the specific target Secondary node as the Primary Secondary node2, the Master nodel may only control and manage common Secondary nodes which are homogeneous with and have the same RAT as the Master node1, and the Primary Secondary node2 controls and manages independently common Secondary nodes which are homogeneous with and have the same RAT as the Primary Secondary node2. At the moment, all heterogeneous base stations which perform the multi-connectivity are divided into different RAT regions and controlled and managed by control anchors in the respective RAT regions, so that the separation of the control and management is realized.

As the secondary control anchor base station, the Primary Secondary node2 may also perform similar control and management operations related to the Master nodel on the common Secondary node and the SCG RL belonging to the homogeneous domain in the same RAT, e.g., addition, deletion and reconfiguration of the common secondary node and the SCG RL, a change of a UE serving cell group, and radio link resource reconfiguration. After the Primary Secondary node2 successfully completes a certain control and management operation, the Primary Secondary node2 needs to report a control and management operation result to the Master nodel through an Xn-C interface, so as to synchronize and update related configuration information with the Master nodel.

In case of a local MCG RL failure or a mobile handover failure on the Master nodel side, the Master nodel may upgrade the Primary Secondary node2 as the new master control anchor base station according to the RRM algorithm or specific requirements. Logically, the Primary Secondary node2 becomes a new Master node1, the NG-C2 performs tasks originally performed by the NG-C1, and the original Uu-C2 which is in the activated state and operates normally is remained and performs tasks originally performed by the Uu-C1. The old Master nodel may be released and deleted from the UE multi-connectivity configuration, or may be maintained as the common Secondary node or a new Primary Secondary node2, and continues to control and manage the common Secondary node in the homogeneous domain in the same RAT (because the old Primary Secondary node2 has been upgraded to the new Master nodel).

If the old Master nodel is released and deleted from the multi-connectivity configuration of the UE, the old NG-C1/U1 (Master) and the old Uu-C1/U1 (Master) must be deleted and released, and the UE delates all the configuration and resource reservation coordination associated with the old Master nodel. If the old Master nodel is maintained as the common Secondary node, the old NG-C1 and the old Uu-C1 may be deleted and released, the old NG-U1 (Master) is reconfigured as a common NG-U (Secondary), the old Uu-U1 (Master) is reconfigured as a Uu-U (Secondary), and the UE reconfigures and maintains the configuration and resource reservation coordination associated with all user planes of the old Master nodel and deletes and releases the configuration and resource reservation coordination associated with all control planes of the old Master nodel. If the old Master nodel is maintained as the new Primary Secondary node2, the old NG-C1 is reconfigured as the NG-C2, the old NG-U1 (Master) is reconfigured as the NG-U2 (Primary Secondary), the old Uu-U1 (Master) is reconfigured as the Uu-U2 (Primary Secondary), the old Uu-C1 is reconfigured as the Uu-C2, and the UE reconfigures and maintains the configuration and resource reservation coordination associated with all user planes and control planes of the old Master nodel.

### Embodiment 1

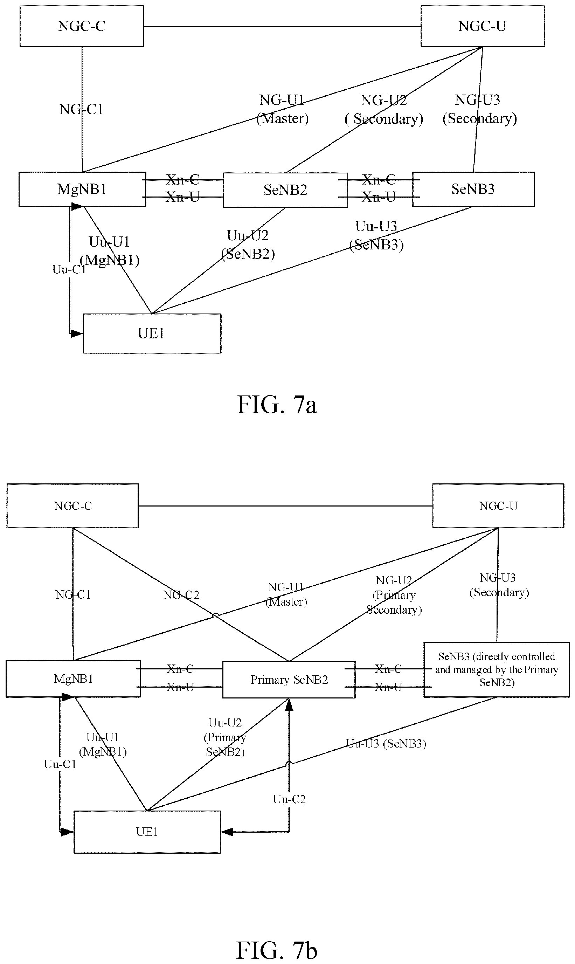

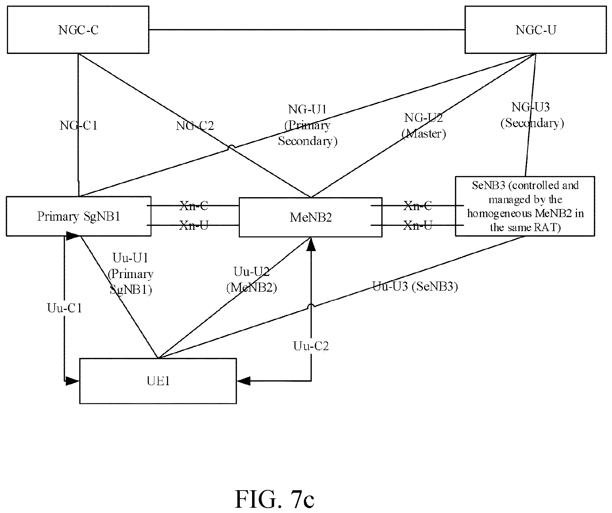

As shown in FIGS. 7a, 7b and 7c, in an NR/eLTE heterogeneous system (a gNB and eLTE eNB heterogeneous hybrid network), one gNB base station and two eLTE eNB base stations are connected to the same NGC CN element, and a UE1 is simultaneously in the radio signal coverage of these three base stations at a certain moment and has basic conditions for performing heterogeneous multi-connectivity data transmission. A macro base station, a gNB1, has the largest signal coverage and is suitable to serve as a master control anchor base station, a Master gNB (i.e., the MgNB1). Micro base stations, an eNB2 and an eNB3, have a relatively small coverage and are suitable to serve as secondary offloading base stations, Secondary eNBs (i.e., the SeNB2 and the SeNB3). The gNB base station, the eLTE base stations and the UE1 all have a capability of "an enhanced heterogeneous multi-connectivity data transmission node under Master control plus Primary Secondary control" of the present invention.

In step 101, as shown in FIG. 7a, a master control anchor base station, the MgNB1, establishes a tightly coupled multi-connectivity data transmission mode under master control of single MgNB1 for the UE1 through an enhanced heterogeneous tightly coupled multi-connectivity data transmission establishment procedure (specifically referring to a tightly coupled multi-connectivity operation establishment procedure in the TS 38.300). Since an Xn terrestrial interface involves a Secondary Node Addition establishment procedure under the XnAP protocol (negotiation and confirmation of a bidirectional resource configuration of the MgNB1 and the SeNB2/3) and a Uu air interface involves an RRC Connection Reconfiguration procedure, related tri-connectivity configuration and resource reservation coordination are performed on the UE1. After the tri-connectivity operation is established and completed, the UE1 has a unique RRC control plane connection on a Uu-C1 interface with the MgNB1 serving as the master control anchor base station, and the CN NGC has a unique NGAP control plane connection on a NG-C1 interface with the MgNB1. The above control plane connections are responsible for control and management of multi-connectivity data transmission of the UE 1. Meanwhile, the UE1 has a user plane connection on the Uu-U2/3 interface with the SeNB2 and the SeNB3 both serving as secondary offloading base stations respectively, and the above connections perform offload transmission of user traffic data packets for the Uu-U1 user plane connection. The NGC also has a user plane connection (e.g., SCG Bearers) on the NG-U2/3 interface with the SeNB2 and the SeNB3 respectively, and the above connections perform offload transmission of user traffic packets for the NG-U1 user plane connection. In this mode, the UE1, the SeNB2 and the SeNB3 are controlled and managed by the unique master control anchor, the MgNB1.

In step 102, as shown in FIG. 7b, at a later moment, the master control anchor base station, the MgNB1, decides to establish an enhanced multi-connectivity data transmission mode under the master control of the MgNB1 plus the secondary control of the SeNB2 for the UE1 according to an RRM measurement report of the UE1, an eNB status report of the SeNB2 and local resource status statistics and analysis. Since the Xn terrestrial interface involves the Primary Secondary Node Addition establishment procedure under the XnAP protocol (the procedure upgrades the SeNB2 to the Primary SeNB2, the MgNB1 needs to perform additional configuration and resource reservation coordination, and the Primary SeNB2 is allowed to independently manage the SeNB3 in the homogeneous domain in the same RAT in the future) and the Uu air interface involves the RRC connection reconfiguration procedure, related configuration and resource reservation coordination are performed on the UE1. After the establishment is completed, in addition to the RRC control plane connection on the Uu-C1 interface with the MgNB1 serving as the master control anchor base station, the UE1 also has an RRC control plane connection on a Uu-C2 interface with the Primary SeNB2 serving as the secondary control anchor base station (both RRC control plane connections are in the activated normal operation state). In addition to the NGAP control plane connection on the NG-C1 interface with the MgNB 1, the CN NGC also has an NGAP control plane connection on an NG-C2 interface with the Primary SeNB2 (which is in the activated normal operation state). The above control plane connections are responsible for control and management of the enhanced tightly coupled multi-connectivity data transmission of the UE1. Meanwhile, the UE1 has a user plane connection on the Uu-U2/3 interface with the Primary SeNB2 and the SeNB3 both serving as secondary offloading base stations respectively, and the above connections perform offload transmission of user traffic data packets for the Uu-U1 user plane connection. The NGC also has a user plane connection (e.g., SCG Bearers) on the NG-U2/3 interface with the Primary SeNB2 and the SeNB3 respectively, and the above connections perform offload transmission of user traffic packets for the NG-U1 user plane connection. In this enhanced mode, the UE1 and the Primary SeNB2 are controlled and managed by the master control anchor base station, the MgNB1. In addition, the UE1 and the SeNB3 are also controlled and managed by the secondary control anchor, the Primary SeNB2. The MgNB1 no longer directly controls and manages the SeNB3.

In step 103, as shown in FIG. 7c, at a later moment, the master control anchor base station, the MgNB1, learns that the Uu-U1 (MgNB1) user plane link fails (cannot continue to transmit normally UE-specific signaling and user data) through a report of a master cell group radio link failure (MCG RLF) of the UE1, and decides to switch to an enhanced multi-connectivity data transmission mode under secondary control of the Primary SgNB1 plus the master control of an MeNB2 for the UE1. Since the Xn terrestrial interface involves a Master Node Change establishment procedure under the XnAP protocol (the procedure upgrades the Primary SeNB2 to the MeNB2 serving as a new master control anchor base station) and a Primary Secondary Node Addition establishment procedure (the procedure makes the MgNB1 become the Primary SgNB1 and serve as a new secondary control anchor base station) and the Uu air interface involves the RRC connection reconfiguration procedure, related configuration and resource reservation coordination are performed on the UE1. After the establishment is completed, in addition to the RRC control plane connection on the Uu-C2 interface with the MeNB2 serving as the new master control anchor base station, the UE1 also has an RRC control plane connection on the Uu-C1 interface with the Primary SgNB1 serving as the new secondary control anchor base station (RRC reestablishment needs to be performed on the Uu-C1 interface and then the RRC control plane link can stay in the activated normal operation state). In addition to the NGAP control plane connection on the NG-C2 interface with the MeNB2, the CN NGC also has an NGAP control plane connection on the NG-C1 interface with the Primary SgNB1 (which is in the activated normal operation state). The above control plane connections are responsible for control and management of the enhanced heterogeneous multi-connectivity data transmission of the UE1. Meanwhile, the UE1 has a user plane connection on the Uu-U1/3 interface with the Primary SgNB1 and the SeNB3 both serving as secondary offloading base stations respectively, and the above connections perform offload transmission of user traffic data packets for the Uu-U2 user plane connection. The NGC also has a user plane connection (e.g., SCG Bearers) on the NG-U1/3 interface with the Primary SgNB1 and the SeNB3 respectively, and the above connections perform offload transmission of user traffic data packets for the NG-U1 user plane connection. In this enhanced mode, the UE1, the Primary SgNB1 and the SeNB3 are controlled and managed by the master control anchor base station, the MeNB2. The UE1 is also controlled and managed by the secondary control anchor base station, the Primary SgNB1. Since the Primary SgNB1 is heterogeneous from and has an RAT different from the SeNB3, the Primary SeNB 1 cannot control and manage the SeNB3.

### Embodiment 2

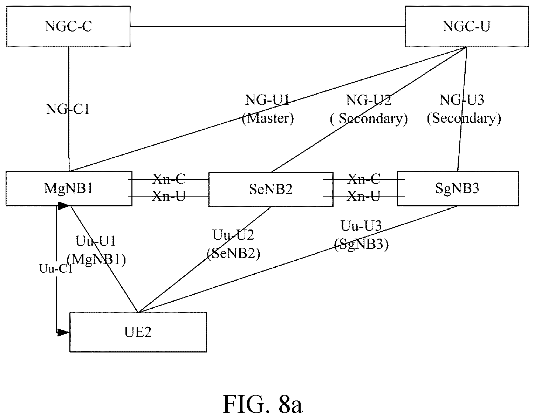

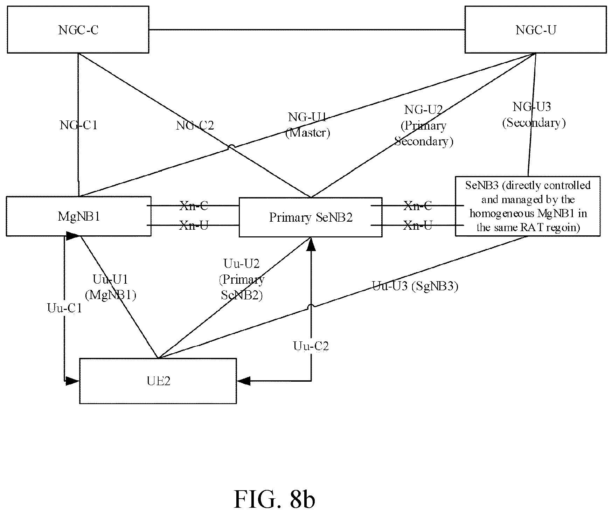

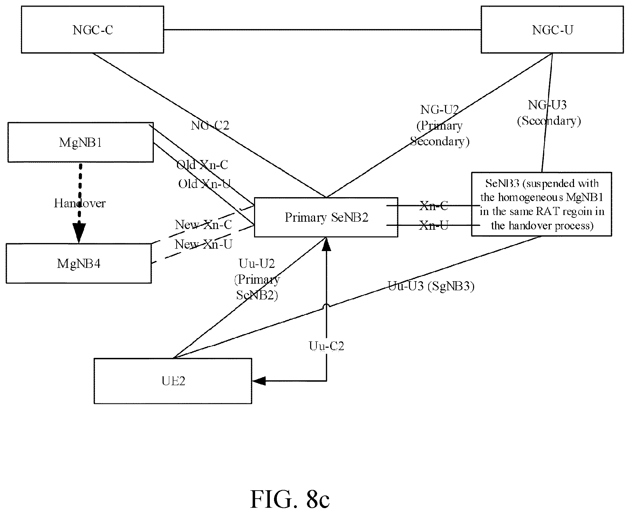

As shown in FIGS. 8a, 8b and 8c, in an NR/eLTE heterogeneous system (a gNB and eLTE eNB heterogeneous hybrid network), two gNB base stations and one eLTE eNB base station are connected to the same NGC CN element, and a UE2 is simultaneously in the radio signal coverage of these three base stations at a certain moment and has basic conditions for performing heterogeneous tightly coupled multi-connectivity data transmission. A macro base station, a gNB1, has the largest signal coverage and is suitable to serve as a master control anchor base station, a Master gNB (i.e., the MgNB1). Micro base stations, an eNB2 and an eNB3, have a relatively small coverage and are suitable to serve as secondary offloading base stations, i.e., the SeNB2 and the SgNB3. NR and eLTE base stations and the UE2 all have a capability of "an enhanced heterogeneous multi-connectivity data transmission node under Master control plus Primary Secondary secondary control" of the present invention.

In step 201, as shown in FIG. 8a, a master control anchor base station, the MgNB1, establishes a heterogeneous multi-connectivity data transmission mode under master control of single MgNB2 for the UE2 through an NR heterogeneous tightly coupled multi-connectivity data transmission establishment procedure (specifically referring to an NR heterogeneous tightly coupled multi-connectivity operation establishment procedure in the TS 38.300). Since an Xn terrestrial interface involves a Secondary Node Addition establishment procedure under the XnAP protocol (negotiation and confirmation of a bidirectional resource configuration of the MgNB1 and the SeNB2 and the SgNB3) and a Uu air interface involves an RRC Connection Reconfiguration procedure, related tri-connectivity configuration and resource reservation coordination are performed on the UE2. After the tri-connectivity operation is established and completed, the UE2 has a unique RRC control plane connection on a Uu-C1 interface with the MgNB1 serving as the master control anchor base station, and the CN NGC has a unique NGAP control plane connection on a NG-C1 interface with the MgNB1. The above control plane connections are responsible for control and management of heterogeneous multi-connectivity data transmission of the UE2. Meanwhile, the UE2 has a user plane connection on the Uu-U2/3 interface with the SeNB2 and the SgNB3 both serving as secondary offloading base stations respectively, and the above connections perform offload transmission of user traffic data packets for the Uu-U1 user plane connection. The NGC also has a user plane connection (e.g., SCG Bearers) on the NG-U2/3 interface with the SeNB2 and the SgNB3 respectively, and the above connections perform offload transmission of user traffic packets for the NG-U1 user plane connection. In this conventional mode, the UE2, the SeNB2 and the SgNB3 all are controlled and managed by the unique master control anchor, the MgNB 1.

In step 202, as shown in FIG. 8b, at a later moment, the master control anchor base station, the MgNB1, decides to establish an enhanced heterogeneous multi-connectivity data transmission mode under the master control of the MgNB1 plus the secondary control of the SeNB2 for the UE2 according to an RRM measurement report of the UE2, an eNB status report of the SeNB2 and local resource status statistics and analysis. Since the Xn terrestrial interface involves the Primary Secondary Node Addition establishment procedure under the XnAP protocol (the procedure upgrades the SeNB2 to the Primary SeNB2, and the MgNB1 needs to perform additional configuration and resource reservation coordination) and the Uu air interface involves the RRC connection reconfiguration procedure, related configuration and resource reservation coordination are performed on the UE2. After the establishment is completed, in addition to the RRC control plane connection on the Uu-C1 interface with the MgNB1 serving as the master control anchor base station, the UE2 also has an RRC control plane connection on a Uu-C2 interface with the Primary SeNB2 serving as the secondary control anchor base station (both RRC control plane connections are in the activated normal operation state). In addition to the NGAP control plane connection on the NG-C1 interface with the MgNB1, the CN NGC also has an NGAP control plane connection on the NG-C2 interface with the Primary SeNB2 (which is in the activated normal operation state). The above control plane connections are responsible for control and management of the enhanced heterogeneous multi-connectivity data transmission of the UE2. Meanwhile, the UE2 has a user plane connection on the Uu-U2/3 interface with the Primary SeNB2 and the SgNB3 both serving as secondary offloading base stations respectively, and the above connections perform offload transmission of user traffic data packets for the Uu-U1 user plane connection. The NGC also has a user plane connection (e.g., SCG Bearers) on the NG-U2/3 interface with the Primary SeNB2 and the SgNB3 respectively, and the above connections perform offload transmission of user traffic packets for the NG-U1 user plane connection. In this enhanced mode, the UE2, the Primary SeNB2 and the SgNB3 are controlled and managed by the master control anchor base station, the MgNB1. In addition, the UE2 is also controlled and managed by the secondary control anchor base station, the Primary SeNB2. Since the Primary SeNB2 is heterogeneous from and has an RAT different from the SgNB3, the Primary SeNB2 cannot control and manage the SgNB3.

In step 203, as shown in FIG. 8c, at a later moment, the master control anchor base station, the MgNB1, prepares to perform a mobile handover for the UE2 (for example, a target is a gNB4) based on the RRM measurement report of the UE2. Since, in this handover process, the Uu-U1 (MgNB1) user plane connection must be interrupted for a period of time (cannot continue to transmit normally UE-specific signaling and user data), the MgNB1 decides to switch to a temporary enhanced heterogeneous multi-connectivity data transmission mode only under the secondary control of the Primary SeNB2 for the UE2. Since the Xn terrestrial interface involves a Master Node Suspend procedure under the XnAP protocol (the procedure makes the primary SeNB2 serve as the secondary control anchor base station to control independently a multi-connectivity operation of the UE2 without the master control of the MgNB1) and a Master Node Handover procedure (the procedure makes the gNB4 serve as a new master control anchor base station, i.e., the Target MgNB4), and the Uu air interface involves the RRC connection reconfiguration procedure, related configuration and resource reservation coordination are performed on the UE2. In the handover process for the UE2, the UE2 has an RRC control plane connection on the Uu-C2 interface with the Primary SeNB2 serving as the secondary control anchor base station, and the CN NGC has an NGAP control plane connection (in the activated normal operation state) on the NG-C2 interface with the Primary SeNB2. The above control plane connections are responsible for control and management of the enhanced multi-connectivity data transmission of the UE2. Meanwhile, the UE2 has a user plane connection on the Uu-U2 interface with the Primary SeNB2 serving as the secondary offloading base station, and the above connection performs offload transmission of user traffic data packets for the Uu-U1 user plane connection. The NGC also has a user plane connection (e.g., SCG Bearers) on the NG-U2 interface with the Primary SeNB2, and the above connection performs offload transmission of user traffic packets for the NG-U1 user plane connection. In this handover process, since the SgNB3 belongs to the homogeneous domain with the same RAT like the MgNB1 and is not controlled or managed by the Primary SeNB2, the SgNB3 is suspended and cannot perform offload transmission of the user plane data until the MgNB4 is successfully switched to. In this enhanced mode, the MgNB1 is temporarily in a handover state and cannot control or manage the UE2, the Primary SeNB2 and the SgNB3 until the MgNB4 is successfully switched to and serves as a new master control anchor base station. In addition, the UE2 is temporarily controlled and managed by the secondary control anchor, the Primary SeNB2.

### Embodiment 3

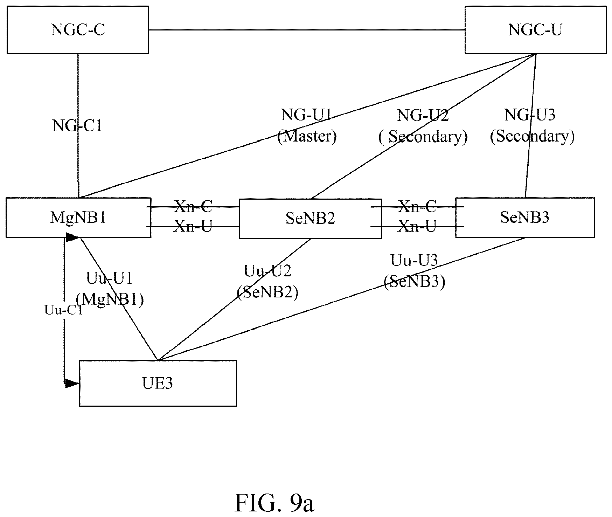

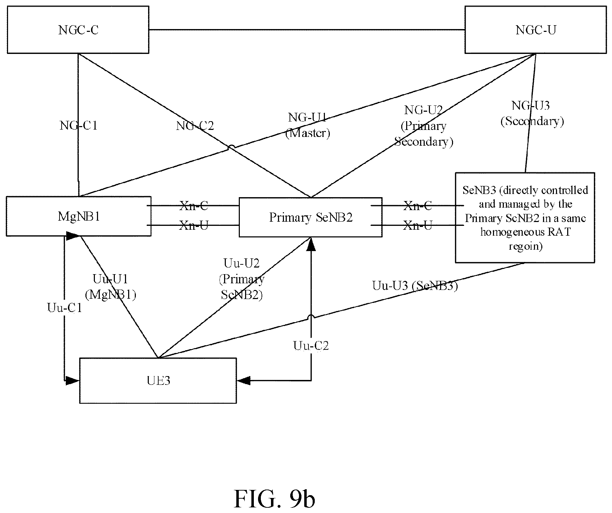

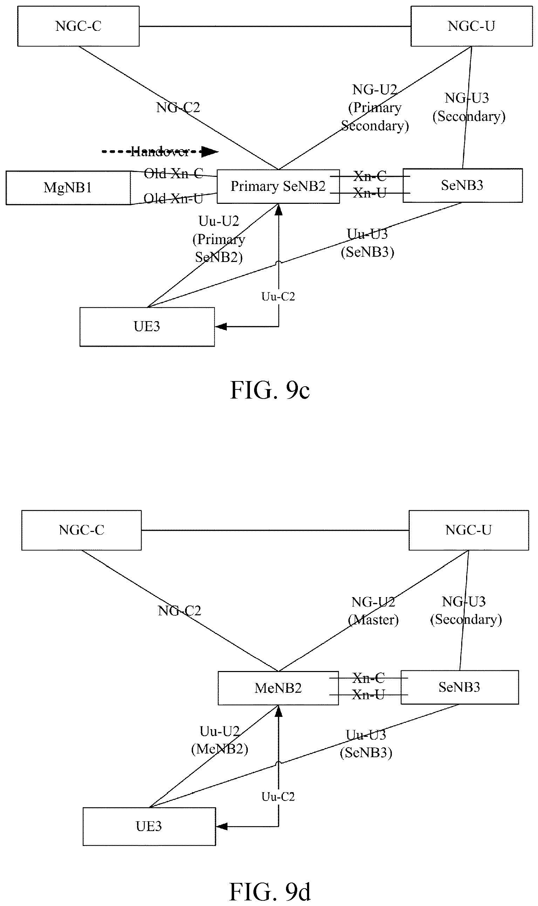

As shown in FIGS. 9a, 9b and 9c, in a tightly coupled system of an NR gNB and an eLTE eNB (the tightly coupled joint work of a new RAT and an eLTE system under the 5G architecture), one NR gNB base station and two eLTE eNB base station are connected to the same NGC CN element, and a UE3 is simultaneously in the radio signal coverage of these three base stations at a certain moment and has basic conditions for performing NR-eLTE tightly coupled heterogeneous multi-connectivity data transmission. A macro base station, a gNB1, has the largest signal coverage and is suitable to serve as a master control anchor base station, a Master gNB (i.e., the MgNB 1). Micro base stations, an eNB2 and an eNB3, have a relatively small coverage and are suitable to serve as secondary offloading base stations, Secondary eNBs (i.e., the SeNB2 and the SeNB3). The NR base station, the eLTE base stations and the UE3 all have a capability of "an enhanced heterogeneous multi-connectivity data transmission node under Master control plus Primary Secondary secondary control" of the present invention.

In step 301, as shown in FIG. 9a, a master control anchor base station, the MgNB1, establishes a tightly coupled multi-connectivity data transmission mode under master control of single MgNB1 for the UE3 through an NR tightly coupled heterogeneous multi-connectivity data transmission establishment procedure (specifically referring to an NR tightly coupled multi-connectivity operation establishment procedure in the TS 38.300). Since an Xn terrestrial interface involves a Secondary Node Addition establishment procedure under the XnAP protocol (negotiation and confirmation of a bidirectional resource configuration of the MgNB1 and the SeNB2/3) and a Uu air interface involves an RRC connection reconfiguration procedure, related tightly coupled tri-connectivity configuration and resource reservation coordination are performed on the UE3. After the tightly coupled tri-connectivity operation is established and completed, the UE3 has a unique RRC control plane connection on a Uu-C1 interface with the MgNB1 serving as the master control anchor base station, and the CN NGC has a unique NGAP control plane connection on a NG-C1 interface with the MgNB1. The above control plane connections are responsible for control and management of tightly coupled heterogeneous multi-connectivity data transmission of the UE3. Meanwhile, the UE3 has a user plane connection on the Uu-U2/3 interface with the SeNB2 and the SeNB3 both serving as the secondary offloading base stations respectively, and the above connections perform offload transmission of user traffic data packets for the Uu-U1 user plane connection. The NGC also has a user plane connection (e.g., SCG Bearers) on the NG-U2/3 interface with the SeNB2 and the SeNB3 respectively, and the above connections perform offload transmission of user traffic packets for the NG-U1 user plane connection. In this conventional mode, the UE3, the SeNB2 and the SeNB3 all are controlled and managed by the unique master control anchor, the MgNB 1.

In step 302, as shown in FIG. 9b, at a later moment, the master control anchor base station, the MgNB1, decides to establish an enhanced heterogeneous multi-connectivity data transmission mode under the master control of the MgNB1 plus the secondary control of the SeNB2 for the UE3 according to an RRM measurement report of the UE3, an eNB status report of the SeNB2 and local resource status statistics and analysis. Since the Xn terrestrial interface involves the Primary Secondary Node Addition establishment procedure under the XnAP protocol (the procedure upgrades the SeNB2 to the Primary SeNB2, the MgNB1 needs to perform additional configuration and resource reservation coordination, and the Primary SeNB2 is allowed to independently manage the SeNB3 in the homogeneous domain in the same RAT in the future) and the Uu air interface involves the RRC connection reconfiguration procedure, related configuration and resource reservation coordination are performed on the UE3. After the establishment is completed, in addition to the RRC control plane connection on the Uu-C1 interface with the MgNB1 serving as the master control anchor base station, the UE3 also has an RRC control plane connection on a Uu-C2 interface with the Primary SeNB2 serving as the secondary control anchor base station (both RRC control plane connections are in the activated normal operation state). In addition to the NGAP control plane connection on the NG-C1 interface with the MgNB1, the CN NGC also has an NGAP control plane connection on the NG-C2 interface with the Primary SeNB2 (which is in the activated normal operation state). The above control plane connections are responsible for control and management of the enhanced tightly coupled heterogeneous multi-connectivity data transmission of the UE3. Meanwhile, the UE3 has a user plane connection on the Uu-U2/3 interface with the Primary SeNB2 and the SeNB3 both serving as the secondary offloading base stations respectively, and the above connections perform offload transmission of user traffic data packets for the Uu-U1 user plane connection. The NGC also has a user plane connection (e.g., SCG Bearers) on the NG-U2/3 interface with the Primary SeNB2 and the SeNB3 respectively, and the above connections perform offload transmission of user traffic packets for the NG-U1 user plane connection. In this enhanced mode, the UE3 and the Primary SeNB2 are controlled and managed by the master control anchor base station, the MgNB1. In addition, the UE1 and the SeNB3 are also controlled and managed by the secondary control anchor, the Primary SeNB2. The MgNB1 no longer directly controls and manages the SeNB3.

In step 303, as shown in FIG. 9c, at a later moment, when an MCG RLF occurs between the master control anchor base station, the MgNB1, and the UE3, and at this moment, the Uu-U1 (MgNB1) user plane connection must be interrupted (cannot continue to transmit normally UE-specific signaling and user data); and the MgNB1 prepares to perform a mobile handover for the UE3 with a target base station as the Primary SeNB2 based on the RRM measurement report of the UE3 and the eNB status report of the Primary SeNB2 and decides to switch to an enhanced heterogeneous multi-connectivity data transmission mode only under the control of the Primary SeNB2 for the UE3. Since the Xn terrestrial interface involves a Master Node Suspend procedure under the XnAP protocol (the procedure makes the primary SeNB2 serve as the secondary control anchor base station to control independently a tightly coupled heterogeneous multi-connectivity operation of the UE2 without the master control of the MgNB1) and a Master Node Handover procedure (the procedure makes the Primary SeNB2 serve as a new master control anchor base station, i.e., the Target MeNB2) and the Uu air interface involves the RRC Connection Reconfiguration procedure, related configuration and resource reservation coordination are performed on the UE3. In the handover process for the UE3, the UE3 has an RRC control plane connection on the Uu-C2 interface with the Primary SeNB2 serving as the secondary control anchor base station, and the CN NGC has an NGAP control plane connection (in the activated normal operation state) on the NG-C2 interface with the Primary SeNB2. The above control plane connections are responsible for control and management of the enhanced tightly coupled multi-connectivity data transmission of the UE3. Meanwhile, the UE3 has a user plane connection on the Uu-U2/3 interface with the Primary SeNB2 and the SeNB3 both serving as the secondary offloading base stations respectively, and the above connections perform offload transmission of user traffic data packets for the Uu-U1 user plane connection. The NGC also has a user plane connection (e.g., SCG Bearers) on the NG-U2/3 interface with the Primary SeNB2 and the SeNB3 respectively, and the above connections perform offload transmission of user traffic packets for the NG-U1 user plane connection. In this handover process, since the SeNB3 and the Primary SeNB2 belong to the homogeneous domain with the same RAT, the SeNB3 is controlled or managed by the Primary SeNB2 and can continue to perform offload transmission of the user plane data. In this enhanced mode, the MgNB1 is temporarily in a handover state and cannot control and manage the UE3, the Primary SeNB2, and the SeNB3 until the MeNB2 is successfully switched to and serves as a new master control anchor base station; and the UE3 and the SeNB3 are temporarily controlled and managed by only the secondary control anchor, the Primary SeNB2. In step 304, as shown in FIG. 9d, at a later moment, the source master control anchor base station, the MgNB1, successfully switches to the target base station, the Primary SeNB2, so that the Primary SeNB2 upgrades to a new master control anchor base station, the MeNB2, and the UE3 quickly switches to the enhanced heterogeneous multi-connectivity data transmission mode only under the master control of the MeNB2. Since the Xn terrestrial interface involves a Master Node Resume procedure under the XnAP protocol (the procedure upgrades the Primary SeNB2 to a new master control anchor base station, the MeNB2, to independently control the tightly coupled heterogeneous multi-connectivity operation of the UE3) and the Uu air interface involves the RRC Connection Reconfiguration procedure, related configuration and resource reservation coordination are performed on the UE3. After the handover process for the UE3, the UE3 has an RRC control plane connection on the Uu-C2 interface with the MeNB2 serving as the master control anchor base station, and the CN NGC has an NGAP control plane connection (in the activated normal operation state) on the NG-C2 interface with the MeNB2. The above control plane connections are responsible for control and management of the enhanced tightly coupled multi-connectivity data transmission of the UE3. Meanwhile, the UE3 has a user plane connection on the Uu-U3 interface with the SeNB3 serving as the secondary offloading base station, and the above connection performs offload transmission of user traffic data packets for the Uu-U2 user plane connection. The NGC also has a user plane connection (e.g., SCG Bearers) on the NG-U2/3 interface with the MeNB2 and the SeNB3 respectively, and the above connections perform offload transmission of user traffic packets for the NG-U2 user plane connection. In this enhanced mode, the MgNB1 and its related interface connection resources are released and deleted, and the UE3 and the SeNB3 are merely controlled and managed by only the master control anchor, the MeNB2.

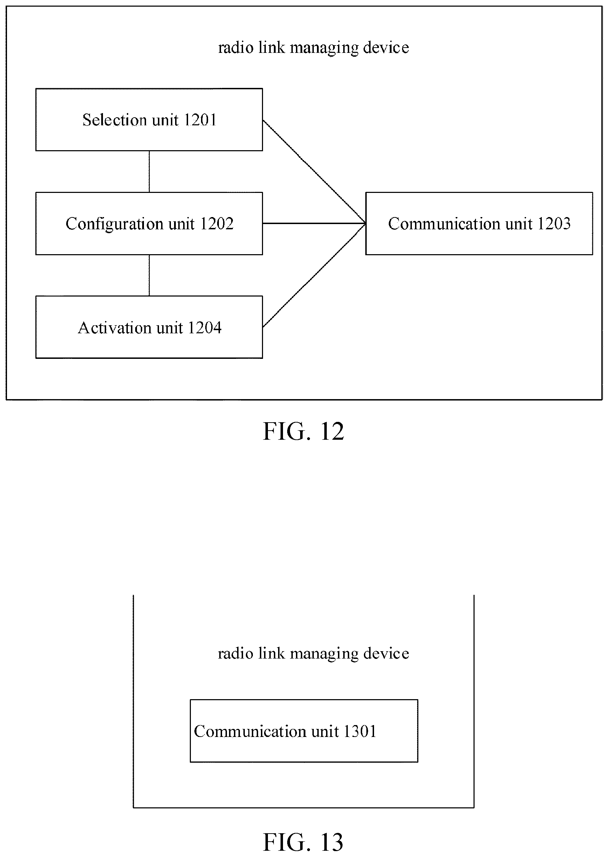

FIG. 12 is a structural diagram one of a radio link managing device according to an embodiment of the present invention. The device is applied to a master control anchor base station, and as shown in FIG. 12, includes a selection unit 1201 and a configuration unit 1202.

The selection unit 1201 is configured to select a target secondary offloading base station which is heterogeneous from the master control anchor base station from a set of secondary offloading base stations.

The configuration unit 1202 is configured to perform a configuration on the target secondary offloading base station and set the configured target secondary offloading base station as a secondary control anchor base station.

The master control anchor base station supports a first type of control operation performed on the secondary control anchor base station and all secondary offloading base stations, the secondary control anchor base station supports a second type of control operation performed on a secondary offloading base station which is homogeneous with the secondary control anchor base station, and the first type of control operation includes the second type of control operation.

In the embodiment, the selection unit 1201 is specifically configured to select the target secondary offloading base station which is heterogeneous from the master control anchor base station from the set of secondary offloading base stations based on an RRM measurement result and/or a radio bearer load of a cell in each secondary offloading base station.

The configuration unit 1202 is specifically configured to performing the configuration on the target secondary offloading base station through an Xn interface signaling of an interface between base station nodes, where the configuration includes a first type of configuration and a second type of configuration, the first type of configuration is used for implementing the first type of control operation supported by the master control anchor base station and performed on the secondary control anchor base station, and the second type of configuration is used for implementing the second type of control operation supported by the secondary control anchor base station and performed on the secondary offloading base station which is homogeneous with the secondary control anchor base station.

In the embodiment, the configuration unit 1202 is further configured to perform the configuration on a common secondary offloading base station through the Xn interface signaling, where the configuration includes only the first type of configuration, and in the set of secondary offloading base stations, secondary offloading base stations except the secondary control anchor base station are common secondary offloading base stations.

In the embodiment, the configuration unit 1202 is further configured to perform a configuration related to the secondary control anchor base station on a terminal UE through RRC signaling of a Uu air interface, where the configuration related to the secondary control anchor base station includes a third type of configuration and a fourth type of configuration, the third type of configuration is used for implementing control plane link logic between the UE and the secondary control anchor base station, and the fourth type of configuration is used for implementing user plane link logic between the UE and the secondary control anchor base station.

In the embodiment, a control plane link and a user plane link exist between the secondary control anchor base station and a CN element.

When a control plane link between the master control anchor base station and the CN element is in a normal operation state, the control plane link between the secondary control anchor base station and the CN element is in a configuration active state or in an inactive state, and the user plane link between the secondary control anchor base station and the CN element is in an active state and operates normally.

When the control plane link between the master control anchor base station and the CN element is in an abnormal operation state, the control plane link and the user plane link between the secondary control anchor base station and the CN element are in active states and operate normally. In the embodiment, a control plane link and a user plane link exist between the secondary control anchor base station and the UE.

The control plane link between the secondary control anchor base station and the UE and a control plane link between the master control anchor base station and the UE are supported to be simultaneously in active states and operate normally, so as to simultaneously and jointly transmit respective RRC signalings of the secondary control anchor base station and the master control anchor base station.

The user plane link between the secondary control anchor base station and the UE and a user plane link between each secondary offloading base station and the UE are supported to be simultaneously in active states and operate normally, so as to simultaneously and jointly transmit user plane data of the secondary control anchor base station and user plane data of the each secondary offloading base station.

In the embodiment, after the master control anchor base station configures the target secondary offloading base station as the secondary control anchor base station, the master control anchor base station supports a first type of control operation performed on a common secondary offloading base station which is homogeneous with the master control anchor base station, where in the set of secondary offloading base stations, secondary offloading base stations except the secondary control anchor base station are common secondary offloading base stations.

In the embodiment, the secondary control anchor base station supporting the second type of control operation performed on the secondary offloading base station which is homogeneous with the secondary control anchor base station includes a step that the secondary control anchor base station performs at least one of following control operations on a common secondary offloading base station which is homogeneous with the secondary control anchor base station:
a radio link addition operation, a radio link deletion operation, a radio link reconfiguration operation, an operation for updating a set of UE serving cells, and a DRB reconfiguration operation;
where in the set of secondary offloading base stations, secondary offloading base stations except the secondary control anchor base station are common secondary offloading base stations.

In the embodiment, the device further includes a communication unit 1203. The communication unit 1203 is configured to, after the secondary control anchor base station successfully performs the second type of control operation on the common secondary offloading base station, synchronize a result of the second type of control operation through an Xn interface signaling between the master control anchor base station and the secondary control anchor base station, so as to synchronize an operation resource configuration state of the common secondary offloading base station.

In the embodiment, the device further includes an activation unit 1204. The activation unit 1204 is configured to, in case of a radio link connection failure or a mobile handover failure between the master control anchor base station and the UE, allow the master control anchor base station to activate the secondary control anchor base station, where when the secondary control anchor base station is in an active state, the secondary control anchor base station performs following additional tasks: a task carried on a control plane link between a new master control anchor base station served by the secondary control anchor base station and a CN element, and a task carried on a control plane link between the new master control anchor base station and the UE.

It is to be understood by those skilled in the art that the device for managing a radio link according to the embodiments of the present invention may be understood with reference to any one of the embodiments of the method for managing a radio link of any one of the embodiments of the present invention.

In practical applications, functions implemented by various units of the radio link management apparatus may all be implemented by a central processing unit (CPU), a micro processor unit (MPU), a digital signal processor (DSP), a field programmable gate array (FPGA) or the like located in the radio link management apparatus.

FIG. 13 is a structural diagram two of a radio link managing device according to an embodiment of the present invention. The device is applied to an secondary control anchor base station, and as shown in FIG. 13, includes a communication unit 1301.

The communication unit 1301 is configured to receive a configuration performed by a master control anchor base station which is heterogeneous from the secondary control anchor base station, where the master control anchor base station supports a first type of control operation performed on the secondary control anchor base station and all secondary offloading base stations, the secondary control anchor base station supports a second type of control operation performed on a secondary offloading base station which is homogeneous with the secondary control anchor base station, and the first type of control operation includes the second type of control operation. In the embodiment, the communication unit 1301 is specifically configured to receive the configuration performed by the master control anchor base station which is heterogeneous from the secondary control anchor base station through an Xn interface signaling, where a first type of configuration is used for implementing the first type of control operation supported by the master control anchor base station and performed on the secondary control anchor base station, and a second type of configuration is used for implementing the second type of control operation supported by the secondary control anchor base station and performed on the secondary offloading base station which is homogeneous with the secondary control anchor base station. In the embodiment, a control plane link and a user plane link exist between the secondary control anchor base station and a CN element.

When a control plane link between the master control anchor base station and the CN element is in a normal operation state, the control plane link between the secondary control anchor base station and the CN element is in a configuration active state or in an inactive state, and the user plane link between the secondary control anchor base station and the CN element is in an active state and operates normally.

When the control plane link between the master control anchor base station and the CN element is in an abnormal operation state, the control plane link and the user plane link between the secondary control anchor base station and the CN element are in active states and operate normally. In the embodiment, a control plane link and a user plane link exist between the secondary control anchor base station and the UE.

The control plane link between the secondary control anchor base station and the UE and a control plane link between the master control anchor base station and the UE are supported to be simultaneously in active states and operate normally, so as to simultaneously and jointly transmit respective RRC signalings of the secondary control anchor base station and the master control anchor base station.

The user plane link between the secondary control anchor base station and the UE and a user plane link between each secondary offloading base station and the UE are supported to be simultaneously in active states and operate normally, so as to simultaneously and jointly transmit user plane data of the secondary control anchor base station and user plane data of the each secondary offloading base station.

In the embodiment, the secondary control anchor base station supporting the second type of control operation performed on the secondary offloading base station which is homogeneous with the secondary control anchor base station includes a step that the secondary control anchor base station performs at least one of following control operations on a common secondary offloading base station which is homogeneous with the secondary control anchor base station:
a radio link addition operation, a radio link deletion operation, a radio link reconfiguration operation, an operation for updating a set of UE serving cells, and a DRB reconfiguration operation;
where in the set of secondary offloading base stations, secondary offloading base stations except the secondary control anchor base station are common secondary offloading base stations.

In the embodiment, the device further includes a communication unit 1301. The communication unit 1301 is configured to, after the secondary control anchor base station successfully performs the second type of control operation on the common secondary base station, synchronize a control operation result through an Xn interface between the master control anchor base station and the secondary control anchor base station, so as to synchronize an operation resource configuration state of the common secondary offloading base station.

In the embodiment, in case of a radio link connection failure or a mobile handover failure between the master control anchor base station and the UE, the secondary control anchor base station is allowed to be activated by the master control anchor base station, where when the secondary control anchor base station is in the active state, the secondary control anchor base station performs following additional tasks: a task carried on a control plane link between a new master control anchor base station served by the secondary control anchor base station and the CN element, and a task carried on a control plane link between the new master control anchor base station and the UE.

It is to be understood by those skilled in the art that the radio link managing device according to the embodiments of the present invention may be understood with reference to any one of the embodiments of the radio link managing method of any one of the embodiments of the present invention.

In addition, an embodiment of the present invention further provides a radio link managing system. The system includes a master control anchor base station and a set of secondary offloading base stations.

The master control anchor base station is configured to select a target secondary offloading base station which is heterogeneous from the master control anchor base station from the set of secondary offloading base stations, perform a configuration on the target secondary offloading base station, and take the configured target secondary offloading base station as an secondary control anchor base station, where the master control anchor base station supports a first type of control operation performed on the secondary control anchor base station and all secondary offloading base stations, the secondary control anchor base station supports a second type of control operation performed on a secondary offloading base station which is homogeneous with the secondary control anchor base station, and the first type of control operation includes the second type of control operation.

In the embodiment, the master control anchor base station is specifically configured to select the target secondary offloading base station which is heterogeneous from the master control anchor base station from the set of secondary offloading base stations based on an RRM measurement result and/or a radio bearer load of a cell in each secondary offloading base station, and perform the configuration on the target secondary offloading base station through an Xn interface signaling, where the configuration includes a first of configuration and a second of configuration, the first type of configuration is used for implementing the first type of control operation supported by the master control anchor base station and performed on the secondary control anchor base station, and the second type of configuration is used for implementing the second type of control operation supported by the secondary control anchor base station and performed on the secondary offloading base station which is homogeneous with the secondary control anchor base station.

In the embodiment, the system further includes a UE.

The master control anchor base station is specifically configured to perform a configuration related to the secondary control anchor base station on a terminal UE through RRC signaling of a Uu air interface, where the configuration related to the secondary control anchor base station includes a third type of configuration and a fourth type of configuration, the third type of configuration is used for implementing control plane link logic between the UE and the secondary control anchor base station, and the fourth type of configuration is used for implementing user plane link logic between the UE and the secondary control anchor base station.

In the embodiment, a control plane link and a user plane link exist between the secondary control anchor base station and the UE.

When a control plane link between the master control anchor base station and the CN element is in a normal operation state, the control plane link between the secondary control anchor base station and the CN element is in a configuration active state or in an inactive state, and the user plane link between the secondary control anchor base station and the CN element is in an active state and operates normally.

When the control plane link between the master control anchor base station and the CN element is in an abnormal operation state, the control plane link and the user plane link between the secondary control anchor base station and the CN element are in active states and operate normally. In the embodiment, after the master control anchor base station configures the target secondary offloading base station as the secondary control anchor base station, the master control anchor base station supports a first type of control operation performed on a common secondary offloading base station which is homogeneous with the master control anchor base station, where in the set of secondary offloading base stations, secondary offloading base stations except the secondary control anchor base station are common secondary offloading base stations.

In practical applications, functions implemented by various units of the radio link managing device may all be implemented by a central processing unit (CPU), a micro processor unit (MPU), a digital signal processor (DSP), a field programmable gate array (FPGA) or the like located in the radio link managing device.

For a more convenient understanding of the solutions in the embodiments of the present invention, the Chinese-English paraphrases of the technical terms in the embodiments of the present invention may be referred to the following table 1.

**Table 1**

| Abbr. | English | Chinese |
|---|---|---|
| LTE | Long Term Evolution | 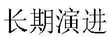 |
| MAC | Medium Access Control | 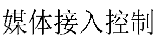 |
| RLC | Radio Link Control | 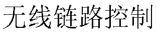 |
| PDCP | Packet Data Convergence Protocol | 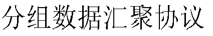 |
| RRC | Radio Resource Control | 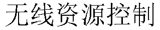 |
| DRB | Data Radio Bearer | 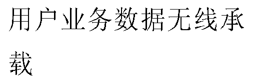 |
| SRB | Signaling Radio Bearer | 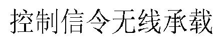 |
| SAP | Service Access Point | 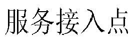 |
| SDU | Service Data Unit | 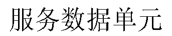 |
| PDU | Packet Data Unit | 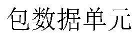 |
| AM | Acknowledged Mode | 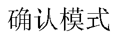 |
| UM | Unacknowledged Mode | 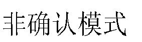 |
| TM | Transparent Mode | 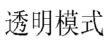 |
| ARQ | Automatic Repeat Request | 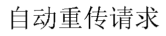 |
| WLAN | Wireless Local Area Network | 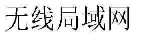 |
| eMBB | Enhanced Mobile Broadband | 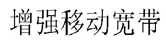 |
| URLLC | Ultra Reliable and Low Latency Communications | 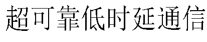 |
| mMTC | Massive Machine-Type-Communications | 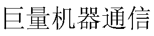 |
| RAT | Radio Access Technology | 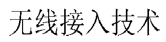 |
| 5G-NR | 5G New Radio | 5G 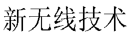 |
| TCP | Transmission Control Protocol | 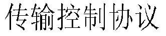 |
| BBU | Base Band Unit | 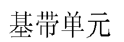 |
| RRU | Remote Radio Unit | 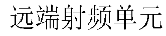 |
| CU | Central Unit | 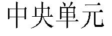 |
| RU | Remote Unit | 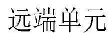 |
| UE | User Equipment | 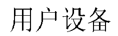 |
| SN | Sequence Number | 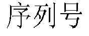 |
| RSN | Reception Sequence Number | 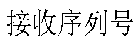 |
| RX_HFN | Reception Hyper Frame Number | 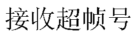 |
| Maximum_RSN | Maximum Reception Sequence Number | 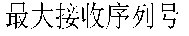 |
| RL | Radio Link | 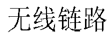 |
| MCG RLF | Master Cell Group Radio Link Failure | 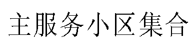 , 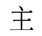 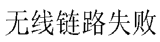 |
| SCG RLF | Secondary Cell Group Radio Link Failure | 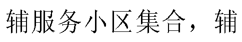 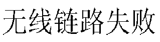 |
| RRM | Radio Resource Management | 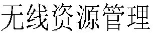 |
| Uu-C | Uu- Control Plane | 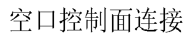 |
| Uu-U | Uu- User Plane | 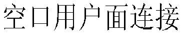 |
| NG-C | Next Generation- Control Plane | 5G 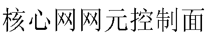 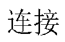 |
| NG-U | Next Generation- User Plane | 5G 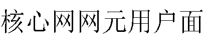 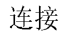 |

It is to be understood by those skilled in the art that the embodiments of the present invention may be provided as methods, systems, or computer program products. Therefore, the present invention may adopt a form of a hardware embodiment, a software embodiment, or a combination of hardware and software embodiments. In addition, the present invention may adopt a form of a computer program product implemented on one or more computer-usable storage media (including, but not limited to, a disk memory, an optical memory and the like) which include computer-usable program codes.

The present invention is described with reference to flowcharts and/or block diagrams of methods, devices (systems) and computer program products according to the embodiments of the present invention. It is to be understood that computer program instructions may implement each flow and/or block in the flowcharts and/or block diagrams and a combination of flows and/or blocks in the flowcharts and/or block diagrams. These computer program instructions may be provided to a general-purpose computer, a special-purpose computer, an embedded processor or a processor of another programmable data processing device to produce a machine so that instructions executed by a computer or the processor of another programmable data processing device produce a means for implementing functions specified in one or more flows in the flowcharts and/or one or more blocks in the block diagrams.

These computer program instructions may also be stored in a computer-readable memory which may direct the computer or another programmable data processing device to operate in a particular manner so that the instructions stored in the computer-readable memory produce a manufactured product including an instructing means. The instructing means implements the functions specified in one or more flows in the flowcharts and/or one or more blocks in the block diagrams.

These computer program instructions may also be loaded onto the computer or another programmable data processing device so that a series of operation steps are performed on the computer or another programmable device to produce processing implemented by the computer. Therefore, instructions executed on the computer or another programmable device provide steps for implementing the functions specified in one or more flows in the flowcharts and/or one or more blocks in the block diagrams.

Accordingly, the embodiments of the present invention further provide a computer storage medium, which is configured to store computer instructions for executing the method for managing a radio link according to the embodiments of the present invention.

The above are only preferred embodiments of the present invention and are not intended to limit the scope of the present invention.

### INDUSTRIAL APPLICABILITY

In the technical solution in the embodiments of the present invention, one secondary control anchor base station is configured and added in a heterogeneous domain in a different RAT with respect to the master control anchor base station, so that the control and management burden related to the UE heterogeneous multi-connectivity configuration operation of the single master control anchor base station is shared by the secondary control anchor base station, and the consumption of control and management resources and air interface signaling resources within the master control anchor base station is spatially equalized. The secondary control anchor base station can have an independent control and management right to the common secondary offloading base stations that are homogeneous with the secondary control anchor base station and in the same RAT region with respect to the secondary control anchor base station, and the master control anchor base station only needs to control and manage the common secondary offloading base stations that are homogeneous with the master control anchor base station and in the same RAT region with respect to the master control anchor base station, so that the burden is relatively reduced.

## Claims

1. A radio link managing method, **characterized by** comprising:
selecting (1001), by a master control anchor base station, a target secondary offloading base station which is in a heterogeneous network under a different radio access technology, RAT, with the master control anchor base station from a set of secondary offloading base stations, performing (1001), by the master control anchor base station, a configuration on the target secondary offloading base station, and setting (1001), by the master control anchor base station, the configured target secondary offloading base station as a secondary control anchor base station,
wherein the master control anchor base station supports a first type of control operation performed on the secondary control anchor base station and all secondary offloading base stations, the secondary control anchor base station supports a second type of control operation performed on a secondary offloading base station which is in a homogeneous network under a same RAT with the secondary control anchor base station, and the first type of control operation comprises the second type of control operation;
wherein a control plane link and a user plane link exist between the secondary control anchor base station and a core network, CN, element, and a control plane link and a user plane link exist between the secondary control anchor base station and a user equipment, UE.

2. The radio link managing method of claim 1, wherein the performing the configuration on the target secondary offloading base station comprises:
performing the configuration on the target secondary offloading base station through an Xn interface signaling of an interface between base station nodes,
wherein the configuration comprises a first type of configuration and a second type of configuration, the first type of configuration is used for implementing the first type of control operation supported by the master control anchor base station and performed on the secondary control anchor base station, and the second type of configuration is used for implementing the second type of control operation supported by the secondary control anchor base station and performed on the secondary offloading base station which is in the homogeneous network with the secondary control anchor base station.

3. The radio link managing method of claim 2, further comprising:
performing, by the master control anchor base station, the configuration on a common secondary offloading base station through the Xn interface signaling, wherein the configuration comprises only the first type of configuration;
wherein in the set of secondary offloading base stations, secondary offloading base stations except the secondary control anchor base station are common secondary offloading base stations.

4. The radio link managing method of claim 1, further comprising:
performing, by the master control anchor base station, a configuration related to the secondary control anchor base station on a terminal UE, through a radio resource control, RRC, signaling of a Uu air interface,
wherein the configuration related to the secondary control anchor base station comprises a third type of configuration and a fourth type of configuration, the third type of configuration is used for implementing control plane link logic between the UE and the secondary control anchor base station, and the fourth type of configuration is used for implementing user plane link logic between the UE and the secondary control anchor base station.

5. The radio link managing method of claim 1,
wherein when a control plane link between the master control anchor base station and the CN element is in a normal operation state, the control plane link between the secondary control anchor base station and the CN element is in a configuration active state or in an inactive state, and the user plane link between the secondary control anchor base station and the CN element is in an active state and operates normally; and
when the control plane link between the master control anchor base station and the CN element is in an abnormal operation state, the control plane link between the secondary control anchor base station and the CN element is in an active state and operates normally, and the user plane link between the secondary control anchor base station and the CN element is in an active state and operates normally.

6. The radio link managing method of claim 1,
wherein the control plane link between the secondary control anchor base station and the UE and a control plane link between the master control anchor base station and the UE are supported to be simultaneously in active states and operate normally, so as to simultaneously and jointly transmit respective RRC signalings of the secondary control anchor base station and the master control anchor base station; and
the user plane link between the secondary control anchor base station and the UE and a user plane link between each secondary offloading base station and the UE are supported to be simultaneously in active states and operate normally, so as to simultaneously and jointly transmit user plane data of the secondary control anchor base station and user plane data of the each secondary offloading base station.

7. The radio link managing method of claim 1, wherein after the master control anchor base station sets the target secondary offloading base station as the secondary control anchor base station, the master control anchor base station supports the first type of control operation performed on a common secondary offloading base station which is in a homogeneous network under a same RAT with the master control anchor base station, wherein in the set of secondary offloading base stations, secondary offloading base stations except the secondary control anchor base station are common secondary offloading base stations.

8. The radio link managing method of claim 1, wherein the secondary control anchor base station supporting the second type of control operation performed on the secondary offloading base station which is in the homogeneous network with the secondary control anchor base station comprises: performing, by the secondary control anchor base station, at least one of following control operations on a common secondary offloading base station which is in the homogeneous network with the secondary control anchor base station:
a radio link addition operation, a radio link deletion operation, a radio link reconfiguration operation, an operation for updating a set of UE serving cells, and a data radio bearer, DRB, reconfiguration operation;
wherein in the set of secondary offloading base stations, secondary offloading base stations except the secondary control anchor base station are common secondary offloading base stations.

9. The radio link managing method of claim 8, further comprising:
after the secondary control anchor base station successfully performs the second type of control operation on the common secondary offloading base station, synchronizing a result of the second type of control operation through an Xn interface signaling between the master control anchor base station and the secondary control anchor base station, so as to synchronize an operation resource configuration state of the common secondary offloading base station.

10. The radio link managing method of claim 1, further comprising:
in case of a radio link connection failure or a mobile handover failure between the master control anchor base station and a UE, allowing the master control anchor base station to activate the secondary control anchor base station, wherein when the secondary control anchor base station is in an active state, the secondary control anchor base station performs following additional tasks: a task carried on a control plane link between a new master control anchor base station served by the secondary control anchor base station and a CN element, and a task carried on a control plane link between the new master control anchor base station and the UE.

11. The radio link managing method of claim 10, further comprising:
releasing an old master control anchor base station from a multi-connectivity configuration of the UE; or
configuring the old master control anchor base station as a common secondary offloading base station; or
configuring the old master control anchor base station as a new secondary control anchor base station;
wherein in the set of secondary offloading base stations, secondary offloading base stations except the secondary control anchor base station are common secondary offloading base stations.

12. The radio link managing method of claim 11, wherein releasing the old master control anchor base station from the multi-connectivity configuration of the UE comprises: releasing a control plane link and a user plane link between the old master control anchor base station and the CN element and resources related to the control plane link and the user plane link between the old master control anchor base station and the CN element, and releasing a control plane link and a user plane link between the old master control anchor base station and the UE and resources related to the control plane link and the user plane link between the old master control anchor base station and the UE.

13. The radio link managing method of claim 11, wherein configuring the old master control anchor base station as the common secondary offloading base station comprises: releasing a control plane link between the old master control anchor base station and the CN element and a control plane link between the old master control anchor base station and the UE, configuring a user plane link between the old master control anchor base station and the CN element as a user plane link between the common secondary offloading base station and the CN element, and configuring a user plane link between the old master control anchor base station and the UE as a user plane link between the common secondary offloading base station and the UE.

14. The radio link managing method of claim 11, wherein configuring the old master control anchor base station as the new secondary control anchor base station comprises: configuring a control plane link between the old master control anchor base station and the CN element as a control plane link between the new secondary control anchor base station and the CN element, configuring a control plane link between the old master control anchor base station and the UE as a control plane link between the new secondary control anchor base station and the UE, configuring a user plane link between the old master control anchor base station and the CN element as a user plane link between the new secondary control anchor base station and the CN element, and configuring a user plane link between the old master control anchor base station and the UE as a user plane link between the new secondary control anchor base station and the UE.

15. A radio link managing device, configured in a master control anchor base station, wherein the radio link managing device is configured to implement the radio link managing method of any one of claims 1-14 and **characterized by** comprising:
a selection unit (1201), which is configured to select a target secondary offloading base station which is in a heterogeneous network under a different radio access technology, RAT, with the master control anchor base station from a set of secondary offloading base stations; and
a configuration unit (1202), which is configured to perform a configuration on the target secondary offloading base station and set the configured target secondary offloading base station as an secondary control anchor base station;
wherein the master control anchor base station supports a first type of control operation performed on the secondary control anchor base station and all secondary offloading base stations, the secondary control anchor base station supports a second type of control operation performed on a secondary offloading base station which is in a homogeneous network under a same RAT with the secondary control anchor base station, and the first type of control operation comprises the second type of control operation;
wherein a control plane link and a user plane link exist between the secondary control anchor base station and a core network, CN, element, and a control plane link and a user plane link exist between the secondary control anchor base station and a user equipment, UE.

## Patentansprüche

1. Funkverbindungs-Verwaltungsverfahren, **dadurch gekennzeichnet, dass** es umfasst:
Das Auswählen (1001) einer sekundären Ziel-Offloading-Basisstation, die sich in einem heterogenen Netzwerk unter einer unterschiedlichen Funkzugangstechnologie (RAT) mit einer Hauptsteueranker-Basisstation befindet, aus einem Satz sekundärer abladender Basisstationen, durch die Hauptsteueranker-Basisstation, und das Durchführen (1001) einer Konfiguration an der sekundären abladenden Ziel-Basisstation durch die Hauptsteueranker-Basisstation, und das Einstellen (1001) der konfigurierten sekundären Ziel-Offloading-Basisstation als sekundäre Steueranker-Basisstation durch die Hauptsteueranker-Basisstation,
wobei die Hauptsteueranker-Basisstation eine erste Art von Steueroperation unterstützt, die auf der sekundären Steueranker-Basisstation und allen sekundären Offloading-Basisstation durchgeführt wird, die sekundäre Steueranker-Basisstation eine zweite Art von Steueroperation unterstützt, die auf einer sekundären Offloading-Basisstation durchgeführt wird, die sich in einem homogenen Netzwerk unter einem gleichen RAT mit der sekundären Steueranker-Basisstation befindet, und die erste Art von Steueroperation die zweite Art von Steueroperation umfasst,
wobei eine Steuerebenen-Verbindung und eine Benutzerebenen-Verbindung zwischen der sekundären Steueranker-Basisstation und einem Kernnetz (CN) Element bestehen und eine Steuerebenen-Verbindung und eine Benutzerebenen-Verbindung zwischen der sekundären Steueranker-Basisstation und einem Benutzergerät (UE) bestehen.

2. Funkverbindungs-Verwaltungsverfahren nach Anspruch 1, wobei das Durchführen der Konfiguration auf der sekundären Ziel-Offloading-Basisstation umfasst:
Durchführen der Konfiguration auf der sekundären Ziel-Offloading-Basisstation durch eine Xn-Schnittstellensignalisierung einer Schnittstelle zwischen Basisstationsknoten,
wobei die Konfiguration eine erste Art von Konfiguration und eine zweite Art von Konfiguration umfasst, wobei die erste Art von Konfiguration zum Implementieren der ersten Art von Steueroperation verwendet wird, die von der Hauptsteueranker-Basisstation unterstützt und auf der sekundären Steueranker-Basisstation ausgeführt wird, und die zweite Art von Konfiguration zum Implementieren der zweiten Art von Steueroperation verwendet wird, die von der sekundären Steueranker-Basisstation unterstützt und auf der sekundären Offloading-Basisstation ausgeführt wird, die sich in dem homogenen Netzwerk mit der sekundären Steueranker-Basisstation befindet.

3. Funkverbindungs-Verwaltungsverfahren nach Anspruch 2, das ferner umfasst:
Durchführen der Konfiguration auf einer gemeinsamen sekundären Offloading-Basisstation durch die Hauptsteueranker-Basisstation über die Xn-Schnittstellensignalisierung, wobei die Konfiguration nur die erste Art der Konfiguration umfasst;
wobei in dem Satz von sekundären Offloading-Basisstation die sekundären Offloading-Basisstation mit Ausnahme der sekundären Steueranker-Basisstation gemeinsame sekundäre Offloading-Basisstation sind.

4. Das Funkverbindungs-Verwaltungsverfahren nach Anspruch 1, das ferner umfasst:
Das Durchführen einer Konfiguration bezüglich der sekundären Steueranker-Basisstation auf einem Endgerät UE durch die Hauptsteueranker-Basisstation über eine RRC-Signalisierung (Radio Resource Control) einer Uu-Luftschnittstelle,
wobei die Konfiguration, die sich auf die sekundäre Steueranker-Basisstation bezieht, einen dritten Konfigurationstyp und einen vierten Konfigurationstyp umfasst, wobei der dritte Konfigurationstyp zum Implementieren einer Verbindungslogik der Steuerebene zwischen dem UE und der sekundären Steueranker-Basisstation verwendet wird, und der vierte Konfigurationstyp zum Implementieren einer Verbindungslogik der Benutzerebene zwischen dem UE und der sekundären Steueranker-Basisstation verwendet wird.

5. Funkverbindungsverwaltungsverfahren nach Anspruch 1,
wobei, wenn eine Steuerebenenverbindung zwischen der Hauptsteueranker-Basisstation und dem CN-Element in einem normalen Betriebszustand ist, die Steuerebenenverbindung zwischen der sekundären Steueranker-Basisstation und dem CN-Element in einem aktiven Konfigurationszustand oder in einem inaktiven Zustand ist, und die Benutzerebenenverbindung zwischen der sekundären Steueranker-Basisstation und dem CN-Element in einem aktiven Zustand ist und normal arbeitet; und
wenn die Steuerebenenverbindung zwischen der Hauptsteueranker-Basisstation und dem CN-Element in einem anormalen Betriebszustand ist, die Steuerebenenverbindung zwischen der sekundären Steueranker-Basisstation und dem CN-Element in einem aktiven Zustand ist und normal arbeitet, und die Benutzerebenenverbindung zwischen der sekundären Steueranker-Basisstation und dem CN-Element in einem aktiven Zustand ist und normal arbeitet.

6. Funkverbindungsverwaltungsverfahren nach Anspruch 1,
wobei die Steuerebenenverbindung zwischen der sekundären Steueranker-Basisstation und dem UE und eine Steuerebenenverbindung zwischen der Hauptsteueranker-Basisstation und dem UE so unterstützt werden, dass sie sich gleichzeitig in aktiven Zuständen befinden und normal arbeiten, um gleichzeitig und gemeinsam entsprechende RRC-Signalisierungen der sekundären Steueranker-Basisstation und der Hauptsteueranker-Basisstation zu übertragen; und
die Benutzerebenenverbindung zwischen der sekundären Steueranker-Basisstation und dem UE und eine Benutzerebenenverbindung zwischen jeder sekundären Offloading-Basisstation und dem UE unterstützt werden, um gleichzeitig in aktiven Zuständen zu sein und normal zu arbeiten, um gleichzeitig und gemeinsam Benutzerebenendaten der sekundären Steueranker-Basisstation und Benutzerebenendaten jeder sekundären Offloading-Basisstation zu übertragen.

7. Funkverbindungs-Verwaltungsverfahren nach Anspruch 1, wobei, nachdem die Hauptsteueranker-Basisstation die sekundäre abladende Ziel-Basisstation als sekundäre Steueranker-Basisstation festgelegt hat, die Hauptsteueranker-Basisstation den ersten Typ von Steuerbetrieb unterstützt, der an einer gemeinsamen sekundären abladenden Basisstation durchgeführt wird, die sich in einem homogenen Netz unter demselben RAT wie die Hauptsteueranker-Basisstation befindet, wobei in der Gruppe der sekundären abladenden Basisstationen die sekundären abladenden Basisstationen mit Ausnahme der sekundären Steueranker-Basisstation gemeinsame sekundäre Offloading-Basisstationsind.

8. Funkverbindungs-Verwaltungsverfahren nach Anspruch 1, wobei die sekundäre Steueranker-Basisstation, die die zweite Art von Steueroperation unterstützt, die an der sekundären Offloading-Basisstationdurchgeführt wird, die sich in dem homogenen Netz mit der sekundären Steueranker-Basisstation befindet, Folgendes umfasst: Durchführen, durch die sekundäre Steueranker-Basisstation, mindestens einer der folgenden Steueroperationen an einer gemeinsamen sekundären Offloading-Basisstation, die sich in dem homogenen Netz mit der sekundären Steueranker-Basisstation befindet
eine Operation zum Hinzufügen von Funkverbindungen, eine Operation zum Löschen von Funkverbindungen, eine Operation zur Rekonfiguration von Funkverbindungen, eine Operation zum Aktualisieren eines Satzes von UE-Bedienungszellen und eine Operation zur Rekonfiguration eines Datenfunkträgers (DRB);
wobei in dem Satz von sekundären abladenden Basisstationen sekundäre abladende Basisstationen mit Ausnahme der sekundären Steueranker-Basisstation gemeinsame sekundäre abladende Basisstationen sind.

9. Funkverbindungs-Verwaltungsverfahren nach Anspruch 8, ferner umfassend:
nachdem die sekundäre Steueranker-Basisstation die zweite Art von Steuerbetrieb auf der gemeinsamen sekundären Offloading-Basisstationerfolgreich durchgeführt hat, Synchronisieren eines Ergebnisses des zweiten Typs von Steuerbetrieb durch eine Xn-Schnittstellensignalisierung zwischen der Hauptsteueranker-Basisstation und der sekundären Steueranker-Basisstation, um einen Betriebsmittel-Konfigurationszustand der gemeinsamen sekundären Offloading-Basisstationzu synchronisieren.

10. Das Funkverbindungs-Verwaltungsverfahren nach Anspruch 1, ferner umfassend:
im Fall eines Funkverbindungsausfalls oder eines mobilen Übergabeausfalls zwischen der Hauptsteueranker-Basisstation und einem UE, Zulassen, dass die Hauptsteueranker-Basisstation die sekundäre Steueranker-Basisstation aktiviert, wobei, wenn die sekundäre Steueranker-Basisstation in einem aktiven Zustand ist, die sekundäre Steueranker-Basisstation die folgenden zusätzlichen Aufgaben ausführt: eine Aufgabe, die auf einer Steuerebenenverbindung zwischen einer neuen Hauptsteueranker-Basisstation, die von der sekundären Steueranker-Basisstation bedient und einem CN-Element ausgeführt wird, und eine Aufgabe, die auf einer Steuerebenenverbindung zwischen der neuen Hauptsteueranker-Basisstation und dem UE ausgeführt wird.

11. Das Funkverbindungs-Verwaltungsverfahren nach Anspruch 10, das ferner umfasst:
Freigeben einer alten Hauptsteueranker-Basisstation aus einer Multi-Konnektivitäts-Konfiguration des UE; oder
Konfigurieren der alten Hauptsteueranker-Basisstation als gemeinsame sekundäre Offloading-Basisstation; oder
Konfigurieren der alten Hauptsteueranker-Basisstation als eine neue sekundäre Steueranker-Basisstation;
wobei in dem Satz von sekundären Offloading-Basisstation die sekundären Offloading-Basisstation mit Ausnahme der sekundären Steueranker-Basisstation gemeinsame sekundäre Offloading-Basisstation sind.

12. Funkverbindungs-Verwaltungsverfahren nach Anspruch 11, wobei das Freigeben der alten Hauptsteueranker-Basisstation aus der Multi-Konnektivitäts-Konfiguration des UE umfasst: Freigeben einer Steuerebenen-Verbindung und einer Benutzerebenen-Verbindung zwischen der alten Hauptsteueranker-Basisstation und dem CN-Element und von Ressourcen, die sich auf die Steuerebenen-Verbindung und die Benutzerebenen-Verbindung zwischen der alten Hauptsteueranker-Basisstation und dem CN-Element beziehen, und Freigeben einer Steuerebenen-Verbindung und einer Benutzerebenen-Verbindung zwischen der alten Hauptsteueranker-Basisstation und dem UE und von Ressourcen, die sich auf die Steuerebenen-Verbindung und die Benutzerebenen-Verbindung zwischen der alten Hauptsteueranker-Basisstation und dem UE beziehen.

13. Funkverbindungs-Verwaltungsverfahren nach Anspruch 11, wobei das Konfigurieren der alten Hauptsteueranker-Basisstation als die gemeinsame sekundäre Offloading-Basisstationumfasst Freigeben einer Steuerebenenverbindung zwischen der alten Hauptsteueranker-Basisstation und dem CN-Element und einer Steuerebenenverbindung zwischen der alten Hauptsteueranker-Basisstation und dem UE, Konfigurieren einer Benutzerebenenverbindung zwischen der alten Hauptsteueranker-Basisstation und dem CN-Element als Benutzerebenenverbindung zwischen der gemeinsamen sekundären Offloading-Basisstation und dem CN-Element, und Konfigurieren einer Benutzerebenenverbindung zwischen der alten Hauptsteueranker-Basisstation und dem UE als Benutzerebenenverbindung zwischen der gemeinsamen sekundären Offloading-Basisstation und dem UE.

14. Funkverbindungs-Verwaltungsverfahren nach Anspruch 11, wobei das Konfigurieren der alten Hauptsteueranker-Basisstation als die neue sekundäre Steueranker-Basisstation umfasst Konfigurieren einer Steuerebenenverbindung zwischen der alten Hauptsteueranker-Basisstation und dem CN-Element als eine Steuerebenenverbindung zwischen der neuen sekundären Steueranker-Basisstation und dem CN-Element, Konfigurieren einer Steuerebenenverbindung zwischen der alten Hauptsteueranker-Basisstation und dem UE als eine Steuerebenenverbindung zwischen der neuen sekundären Steueranker-Basisstation und dem UE, Konfigurieren einer Benutzerebenenverbindung zwischen der alten Hauptsteueranker-Basisstation und dem CN-Element als eine Benutzerebenenverbindung zwischen der neuen sekundären Steueranker-Basisstation und dem CN-Element, und Konfigurieren einer Benutzerebenenverbindung zwischen der alten Hauptsteueranker-Basisstation und dem UE als eine Benutzerebenenverbindung zwischen der neuen sekundären Steueranker-Basisstation und dem UE.

15. Funkverbindungs-Verwaltungsvorrichtung, die in einer Hauptsteueranker-Basisstation konfiguriert ist, wobei die Funkverbindungs-Verwaltungsvorrichtung konfiguriert ist, um das Funkverbindungs-Verwaltungsverfahren nach einem der Ansprüche 1-14 zu implementieren, und **dadurch gekennzeichnet ist, dass** sie Folgendes umfasst:
eine Auswahleinheit (1201), die so konfiguriert ist, dass sie eine sekundäre Ziel-Offloading-Basisstation, die sich in einem heterogenen Netzwerk unter einer anderen Funkzugangstechnologie (RAT) als die Hauptsteueranker-Basisstation befindet, aus einem Satz von sekundären Offloading-Basisstationenauswählt; und
eine Konfigurationseinheit (1202), die so konfiguriert ist, dass sie eine Konfiguration an der sekundären Ziel-Offloading-Basisstation durchführt und die konfigurierte sekundäre Ziel-Offloading-Basisstation als sekundäre Steueranker-Basisstation einstellt;
wobei die Hauptsteueranker-Basisstation eine erste Art von Steueroperation unterstützt, die auf der sekundären Steueranker-Basisstation und allen sekundären Offloading-Basisstationdurchgeführt wird, die sekundäre Steuerungsanker-Basisstation eine zweite Art von Steueroperation unterstützt, die auf einer sekundären Offloading-Basisstationdurchgeführt wird, die sich in einem homogenen Netzwerk unter einem gleichen RAT mit der sekundären Steueranker-Basisstation befindet, und die erste Art von Steueroperation die zweite Art von Steueroperation umfasst
wobei eine Steuerebenen-Verbindung und eine Benutzerebenen-Verbindung zwischen der sekundären Steueranker-Basisstation und einem Kernnetz-, CN-, Element bestehen und eine Steuerebenen-Verbindung und eine Benutzerebenen-Verbindung zwischen der sekundären Steueranker-Basisstation und einem Benutzergerät, UE, bestehen.

## Revendications

1. Procédé de gestion de liaison radio, **caractérisé en ce qu'**il comprend :
la sélection (1001), par une station de base d'ancrage de commande principale, d'une station de base de déchargement secondaire cible qui se trouve dans un réseau hétérogène sous une technologie d'accès radio, RAT, différente de la station de base d'ancrage de commande principale à partir d'un ensemble de stations de base de déchargement secondaires, l'exécution (1001), par la station de base d'ancrage de commande principale, d'une configuration sur la station de base de déchargement secondaire cible, et le réglage (1001), par la station de base d'ancrage de commande principale, de la station de base de déchargement secondaire cible configurée en tant que station de base d'ancrage de commande secondaire
dans lequel la station de base d'ancrage de commande principale prend en charge un premier type d'opération de commande effectuée sur la station de base d'ancrage de commande secondaire et toutes les stations de base de déchargement secondaires, la station de base d'ancrage de commande secondaire prend en charge un deuxième type d'opération de commande effectuée sur une station de base de déchargement secondaire qui est dans un réseau homogène sous une même RAT avec la station de base d'ancrage de commande secondaire, et le premier type d'opération de commande comprend le deuxième type d'opération de commande
dans lequel une liaison de plan de commande et une liaison de plan d'utilisateur existent entre la station de base d'ancrage de commande secondaire et un élément de réseau central, CN, et une liaison de plan de commande et une liaison de plan d'utilisateur existent entre la station de base d'ancrage de commande secondaire et un équipement d'utilisateur, UE.

2. Procédé de gestion de liaison radio de la revendication 1, dans lequel l'exécution de la configuration sur la station de base de déchargement secondaire cible comprend :
l'exécution de la configuration sur la station de base de déchargement secondaire cible par l'intermédiaire d'une signalisation d'interface Xn d'une interface entre des nœuds de station de base,
dans lequel la configuration comprend un premier type de configuration et un second type de configuration, le premier type de configuration est utilisé pour mettre en œuvre le premier type d'opération de commande pris en charge par la station de base d'ancrage de commande principale et effectué sur la station de base d'ancrage de commande secondaire, et le second type de configuration est utilisé pour mettre en œuvre le second type d'opération de commande pris en charge par la station de base d'ancrage de commande secondaire et effectué sur la station de base de déchargement secondaire qui est dans le réseau homogène avec la station de base d'ancrage de commande secondaire.

3. Le procédé de gestion de liaison radio de la revendication 2, comprenant en outre :
l'exécution, par la station de base d'ancrage de commande principale, de la configuration sur une station de base de déchargement secondaire commune par l'intermédiaire de la signalisation d'interface Xn, dans laquelle la configuration comprend uniquement le premier type de configuration ;
dans lequel, dans l'ensemble des stations de base de déchargement secondaire, les stations de base de déchargement secondaire à l'exception de la station de base d'ancrage de commande secondaire sont des stations de base de déchargement secondaire communes.

4. Le procédé de gestion de liaison radio de la revendication 1, comprenant en outre :
l'exécution, par la station de base d'ancrage de commande principale, d'une configuration liée à la station de base d'ancrage de commande secondaire sur un UE terminal, par l'intermédiaire d'une signalisation de commande de ressources radio, RRC, d'une interface aérienne Uu,
dans lequel la configuration relative à la station de base d'ancrage de commande secondaire comprend un troisième type de configuration et un quatrième type de configuration, le troisième type de configuration est utilisé pour mettre en œuvre une logique de liaison de plan de commande entre l'UE et la station de base d'ancrage de commande secondaire, et le quatrième type de configuration est utilisé pour mettre en œuvre une logique de liaison de plan d'utilisateur entre l'UE et la station de base d'ancrage de commande secondaire.

5. Procédé de gestion de liaison radio selon la revendication 1,
dans lequel, lorsqu'une liaison de plan de commande entre la station de base d'ancrage de commande principale et l'élément CN est dans un état de fonctionnement normal, la liaison de plan de commande entre la station de base d'ancrage de commande secondaire et l'élément CN est dans un état actif de configuration ou dans un état inactif, et la liaison de plan d'utilisateur entre la station de base d'ancrage de commande secondaire et l'élément CN est dans un état actif et fonctionne normalement ; et
lorsque la liaison du plan de commande entre la station de base d'ancrage de commande principale et l'élément CN est dans un état de fonctionnement anormal, la liaison du plan de commande entre la station de base d'ancrage de commande secondaire et l'élément CN est dans un état actif et fonctionne normalement, et la liaison du plan d'utilisateur entre la station de base d'ancrage de commande secondaire et l'élément CN est dans un état actif et fonctionne normalement.

6. Procédé de gestion de liaison radio selon la revendication 1,
dans lequel la liaison de plan de commande entre la station de base d'ancrage de commande secondaire et l'UE et une liaison de plan de commande entre la station de base d'ancrage de commande principale et l'UE sont prises en charge pour être simultanément dans des états actifs et fonctionner normalement, de façon à transmettre simultanément et conjointement des signalisations RRC respectives de la station de base d'ancrage de commande secondaire et de la station de base d'ancrage de commande principale ; et
la liaison de plan d'utilisateur entre la station de base d'ancrage de commande secondaire et l'UE et une liaison de plan d'utilisateur entre chaque station de base de déchargement secondaire et l'UE sont pris en charge pour être simultanément dans des états actifs et fonctionner normalement, de façon à transmettre simultanément et conjointement des données de plan d'utilisateur de la station de base d'ancrage de commande secondaire et des données de plan d'utilisateur de chaque station de base de déchargement secondaire.

7. Procédé de gestion de liaison radio selon la revendication 1, dans lequel après que la station de base d'ancrage de commande principale a défini la station de base de déchargement secondaire cible en tant que station de base d'ancrage de commande secondaire, la station de base d'ancrage de commande principale prend en charge le premier type d'opération de commande effectuée sur une station de base de déchargement secondaire commune qui est dans un réseau homogène sous une même RAT avec la station de base d'ancrage de commande principale, dans lequel dans l'ensemble des stations de base de déchargement secondaire, les stations de base de déchargement secondaire à l'exception de la station de base d'ancrage de commande secondaire sont des stations de base de déchargement secondaire communes.

8. Procédé de gestion de liaison radio selon la revendication 1, dans lequel la station de base d'ancrage de commande secondaire prend en charge le deuxième type d'opération de commande effectuée sur la station de base de déchargement secondaire qui est dans le réseau homogène avec la station de base d'ancrage de commande secondaire, comprenant : l'exécution, par la station de base d'ancrage de commande secondaire, d'au moins une des opérations de commande suivantes sur une station de base de déchargement secondaire commune qui est dans le réseau homogène avec la station de base d'ancrage de commande secondaire
une opération d'ajout de liaison radio, une opération de suppression de liaison radio, une opération de reconfiguration de liaison radio, une opération de mise à jour d'un ensemble de cellules de service d'UE, et une opération de reconfiguration de support radio de données, DRB ;
dans lequel, dans l'ensemble des stations de base de déchargement secondaire, les stations de base de déchargement secondaire, à l'exception de la station de base d'ancrage de contrôle secondaire, sont des stations de base de déchargement secondaire communes.

9. Le procédé de gestion de liaison radio de la revendication 8, comprenant en outre :
après que la station de base d'ancrage de commande secondaire a effectué avec succès le deuxième type d'opération de commande sur la station de base de déchargement secondaire commune, synchroniser un résultat du deuxième type d'opération de commande par l'intermédiaire d'une signalisation d'interface Xn entre la station de base d'ancrage de commande principale et la station de base d'ancrage de commande secondaire, de façon à synchroniser un état de configuration de ressource d'opération de la station de base de déchargement secondaire commune.

10. Le procédé de gestion de liaison radio de la revendication 1, comprenant en outre :
en cas d'échec de connexion de liaison radio ou d'échec de transfert mobile entre la station de base d'ancrage de commande principale et un UE, permettre à la station de base d'ancrage de commande principale d'activer la station de base d'ancrage de commande secondaire, dans lequel lorsque la station de base d'ancrage de commande secondaire est dans un état actif, la station de base d'ancrage de commande secondaire exécute les tâches supplémentaires suivantes : une tâche transportée sur une liaison de plan de commande entre une nouvelle station de base d'ancrage de commande principale desservie par la station de base d'ancrage de commande secondaire et un élément CN, et une tâche transportée sur une liaison de plan de commande entre la nouvelle station de base d'ancrage de commande principale et l'UE.

11. Le procédé de gestion de liaison radio de la revendication 10, comprenant en outre :
la libération d'une ancienne station de base d'ancrage de commande principale d'une configuration de multi-connectivité de l'UE ; ou
configurer l'ancienne station de base d'ancrage de commande principale en tant que station de base de déchargement secondaire commune ; ou
configurer l'ancienne station de base d'ancrage de commande maître comme une nouvelle station de base d'ancrage de commande secondaire ;
dans lequel, dans l'ensemble de stations de base de déchargement secondaire, les stations de base de déchargement secondaire, à l'exception de la station de base d'ancrage de commande secondaire, sont des stations de base de déchargement secondaire communes.

12. Le procédé de gestion de liaison radio de la revendication 11, dans lequel la libération de l'ancienne station de base d'ancrage de commande principale de la configuration de multi-connectivité de l'UE comprend : la libération d'une liaison de plan de commande et d'une liaison de plan d'utilisateur entre l'ancienne station de base d'ancrage de commande principale et l'élément CN et des ressources liées à la liaison de plan de commande et à la liaison de plan d'utilisateur entre l'ancienne station de base d'ancrage de commande principale et l'élément CN, et la libération d'une liaison de plan de commande et d'une liaison de plan d'utilisateur entre l'ancienne station de base d'ancrage de commande principale et l'UE et des ressources liées à la liaison de plan de commande et à la liaison de plan d'utilisateur entre l'ancienne station de base d'ancrage de commande principale et l'UE.

13. Le procédé de gestion de liaison radio de la revendication 11, dans lequel la configuration de l'ancienne station de base d'ancrage de commande principale en tant que la station de base de déchargement secondaire commune comprend : la libération d'une liaison de plan de commande entre l'ancienne station de base d'ancrage de commande principale et l'élément CN et d'une liaison de plan de commande entre l'ancienne station de base d'ancrage de commande principale et l'élément UE, la configuration d'une liaison de plan d'utilisateur entre l'ancienne station de base d'ancrage de commande principale et l'élément CN en tant que liaison de plan d'utilisateur entre la station de base de déchargement secondaire commune et l'élément CN, et la configuration d'une liaison de plan d'utilisateur entre l'ancienne station de base d'ancrage de commande principale et l'élément UE en tant que liaison de plan d'utilisateur entre la station de base de déchargement secondaire commune et l'élément UE.

14. Le procédé de gestion de liaison radio de la revendication 11, dans lequel la configuration de l'ancienne station de base d'ancrage de commande maître en tant que nouvelle station de base d'ancrage de commande secondaire comprend : la configuration d'une liaison de plan de commande entre l'ancienne station de base d'ancre de commande principale et l'élément CN en tant que liaison de plan de commande entre la nouvelle station de base d'ancre de commande secondaire et l'élément CN, la configuration d'une liaison de plan de commande entre l'ancienne station de base d'ancre de commande principale et l'UE comme une liaison de plan de commande entre la nouvelle station de base d'ancre de commande secondaire et l'UE, la configuration d'une liaison de plan d'utilisateur entre l'ancienne station de base d'ancre de commande principale et l'élément CN comme une liaison de plan d'utilisateur entre la nouvelle station de base d'ancre de commande secondaire et l'élément CN, et la configuration d'une liaison de plan d'utilisateur entre l'ancienne station de base d'ancre de commande principale et l'UE comme une liaison de plan d'utilisateur entre la nouvelle station de base d'ancre de commande secondaire et l'UE.

15. Dispositif de gestion de liaison radio, configuré dans une station de base d'ancrage de commande maître, dans lequel le dispositif de gestion de liaison radio est configuré pour mettre en œuvre le procédé de gestion de liaison radio de l'une quelconque des Revendications 1-14 et **caractérisé en ce qu'**il comprend :
une unité de sélection (1201), qui est configurée pour sélectionner une station de base de déchargement secondaire cible qui est dans un réseau hétérogène sous une technologie d'accès radio, RAT, différente de la station de base d'ancrage de commande principale à partir d'un ensemble de stations de base de déchargement secondaires ; et
une unité de configuration (1202), qui est configurée pour effectuer une configuration sur la station de base de déchargement secondaire cible et définir la station de base de déchargement secondaire cible configurée comme une station de base d'ancrage de commande secondaire ;
dans lequel la station de base d'ancrage de commande principale prend en charge un premier type d'opération de commande effectuée sur la station de base d'ancrage de commande secondaire et toutes les stations de base de déchargement secondaires, la station de base d'ancrage de commande secondaire prend en charge un deuxième type d'opération de commande effectuée sur une station de base de déchargement secondaire qui est dans un réseau homogène sous une même RAT avec la station de base d'ancrage de commande secondaire, et le premier type d'opération de commande comprend le deuxième type d'opération de commande
dans lequel une liaison de plan de commande et une liaison de plan d'utilisateur existent entre la station de base d'ancrage de commande secondaire et un élément de réseau central, CN, et une liaison de plan de commande et une liaison de plan d'utilisateur existent entre la station de base d'ancrage de commande secondaire et un équipement d'utilisateur, UE.
